Europäisches Patentamt

European Patent Office

Office européen des brevets

(11) Veröffentlichungsnummer: **0 078 064**
**B1**

## (12) EUROPÄISCHE PATENTSCHRIFT

(45) Veröffentlichungstag der Patentschrift: **15.04.87**

(21) Anmeldenummer: **82109994.2**

(22) Anmeldetag: **28.10.82**

(51) Int. Cl.⁴: **B 01 D 29/10**, B 29 B 7/14,
B 29 C 47/58 // B29B17/02

(54) **Vorrichtung zum Trennen von Materialien unterschiedlicher Konsistenz.**

(30) Priorität: 28.10.81 DE 3142806
19.11.81 DE 3145906
21.10.82 DE 3239030

(43) Veröffentlichungstag der Anmeldung:
04.05.83 Patentblatt 83/18

(45) Bekanntmachung des Hinweises auf die
Patenterteilung:
15.04.87 Patentblatt 87/16

(84) Benannte Vertragsstaaten:
AT BE CH DE FR GB IT LI NL SE

(56) Entgegenhaltungen:
AT-B- 300 313
AT-B- 363 407
DD-A- 144 229
DE-A-2 700 542
DE-A-2 823 092
DE-A-2 947 673
DE-C- 861 548
US-A-3 093 579
US-A-3 126 818
US-A-4 177 234

(73) Patentinhaber: Gail, Josef
Klausenweg 4
D-8890 Aichach (DE)

(72) Erfinder: Gail, Josef
Klausenweg 4
D-8890 Aichach (DE)
Der weitere Erfinder hat auf seine Nennung
verzichtet

(74) Vertreter: Liska, Horst, Dr. et al
Patentanwälte H. Weickmann, Dr. K. Fincke, F.A.
Weickmann, B. Huber, Dr. H. Liska, Dr. J.
Prechtel Möhlstrasse 22 Postfach 86 08 20
D-8000 München 86 (DE)

Courier Press, Leamington Spa, England.

**Beschreibung**

Die Erfindung betrifft eine Vorrichtung zum Trennen von Materialien unterschiedlicher Konsistenz, insbesondere zum Trennen von Thermoplastkunststoff-Feststoff-Gemischen oder Gemischen aus unterschiedlich schmelzbaren Kunststoffen, mit einem Gehäuse, einem in einer Kammer des Gehäuses gehaltenen, hohlyzylindrischen Filterkörper aus einem rohrförmigen Materialstück mit ihn radial durchdringenden Filterlöchern, einer in dem Gehäuse gelagerten, gleichachsig zum Filterkörper drehend angetriebenen Schaberwelle, welche den Filterkörper unter Bildung eines Ringraums axial durchsetzt und in dem Ringraum an ihrem Mantel wenigstens einem zum Filterkörper radial abstehenden Schraber trägt, mit einer das Materialgemisch unter Druck in den Ringraum einführenden Fördereinrichtung, einem ersten, mit der Filteraußenseite verbundenen Materialauslaß für das gefilterte Material und einem zweiten, mit der Filterinnerseite verbundenen Materialauslaß mit Rückstaueigenschaft für das Rückstandsmaterial.

Bei einer Vielzahl Herstellungsprozesse fallen große Mengen Abfallmaterial aus thermoplastischem Kunststoff an. Die Kunststoffabfälle sind jedoch meist durch Metallbeschichtungen, wie z.B. in der Verpackungsindustrie oder durch Drahtabfälle, wie in der Kabelindustrie verunreinigt. Da thermoplastische Kunststoffe durch Erwärmen plastifizierbar sind, bieten sie sich zur Wiederaufbereitung an.

Aus der deutschen Offenlegungsschrift DE—A—28 37 621 ist eine Trennvorrichtung zur Wideraufbereitung von thermoplastischem Kunststoff bekannt, der durch Metallfolienabfälle, insbesondere Aluminium, verunreinigt ist. Das zu trennende Kunststoffgemisch wird in einem Extruder plastifiziert und mit hohem Druck durch einen hohlzylindrischen Filterkörper gedrückt. Der die Metallabfälle enthaltende Filterungsrückstand verstopft die Öffnungen des Filterkörpers und wird deshalb kontinuierlich mittels einer Reinungsschnecke aus dem Filterkörperinnenraum abgeführt. Es hat sich jedoch gezeigt, daß die Reinigungswirkung der Schnecke nur unzureichend ist und sich bereits nach kurzer Betriebszeit der Rückstand nicht mehr vom Filterkörper abschieben läßt.

Die mangelhafte Reinigungswirkung der Schnecke wird wesentlich durch die Art der benutzten Filterkörper hervorgerufen. Herkömmliche Filterkörper zum Trennen von Kunststoffen bestehen aus einer Vielzahl gleichachsig angeordneter Schreiben, von denen jede eine umlaufende Nut in einer ihrer Scheibenflächen aufweist, die mit der gegenüberliegenden Scheibenfläche der benachbarten Ringscheibe einen Ringkanal bildet. Zwischen dem Innenrand und der Ringnut sind in den dort verbliebenem, ringförmigen Steg eine Vielzahl radialer Rillen eingearbeitet, beispielsweise eingepreßt, die bei zusammengesetzten Ringscheiben die Filteröffnungen des Filterkörpers bilden. Da bei dem Filterkörper außerordentlich hohe Drücke, von beispielsweise 200 bar und mehr auftreten, wird das Rückstandsmaterial trotz hoher axialer Paketspannkräfte des Filterkörpers zwischen die Scheiben eingedrückt, do daß es nicht mehr entfernt werden kann, und der Filterkörper unbrauchbar wird.

Aus der DE—A—2 823 092 ist ein senkrecht stehendes Drehfilter für die kontinuierliche Abtrennung von Grobpartilkeln aus einer Suspension, insbesondere von Festschmierstoffen, wie beispielsweise Graphit, bekannt. Um das Verstopfen der Sieböffnungen des hohlzylindrischen Filterkörpers des Drehfilters zu verhindern, sitzt in dem Filterkörper ein zentrisch drehbarer Abstreifer, der mittels Druckfedern an den Innenmantel des Filterkörpers gepreßt wird, Die Abstreifer sitzen radial verschiebbar in Kammern einer Welle und werden von Druckfedern, die zwischen der Abstreiferwelle und dem Abstreifer eingespannt sind, nach radial außen gedrängt.

Aufgabe der Erfindung ist es, die vorstehend erläuterte Trennvorrichtung so zu verbessern, daß der Filterkörper nicht nur den hohen Innendrücken besser standhält, sondern auch besser gereinigt werden kann und eine höherer Durchsatz an gefiltertem Material mit hohem Reinheitsgrad erreicht wird.

Diese Aufgabe wird erfindungsgemäß dadurch gelöst, daß in die äußere Umfangsfläche des Filterkörpers unter Bildung von einstückig mit dem Filterkörper verbundener radialer Erhebungen radiale Vertiefungen eingeformt sind, die sich mit den Erhebungen abwechseln und die Filterlöcher enthalten, daß die Erhebungen des Filterkörpers an der inneren Umfangsfläche der Kammer anliegen und daß der bzw. die Schaber radial federnd gegen die innere Umfangsfläche des Filterkörpers vorgespannt sind.

Der Filterkörper besteht aus einem einzigen Materialstück, aus dem die Erhebungen durch Einarbeiten der Vertiefungen herausgearbeitet sind. Die Vertiefungen können beispielsweise gefräst, geschliffen oder gebohrt werden. Die Schaber, die mit hohen radialen Kräften, beispielsweise in der Größenordnung 300 kg und mehr gegen den Innenmantel des Filterkörpers gedrükt werden, stützen sich über die Erhebungen am Gehäuse ab. Da die Böden der Vertiefungen einstückig mit den Erhebungen verbunden sind, sind sie steifer und mit höherem Innendruck belastbar als ein glattwandiges Filterrohr gleicher Stärke. Die Bodenstärke der Vertiefungen kann problemlos auf 2 mm und weniger, vorzugsweise 1 mm verringert werden, so daß mit Laser- oder Elektronenstrahlbearbeitungsverfahren Filterlöcher mit einem Durchmesser von 80 bis 200 µm wirtschaftlich hergestellt werden können. Die Teife der Filterlöcher beträgt weniger als 10 mal den Lochdurchmesser.

Herkömmliche, als Scheibenpaket ausgebildete Filterkörper haben pro Scheibe lediglich eine einzige Lochreihe an ihrem Innenumfang. Bei in Rahmen der Erfindung benutzten Filterkörpern können in den Vertiefungen hingegen ein Vielfaches an Filterlöchern durch Laser- oder Elektronenstrahlbearbeitungsverfahren eingebrannt werden. Die Filterleistung kann deshalb gegenüber herkömmlichen Filterkörpern erhöht werden.

In einer bevorzugten Ausführungsform sind die Erhebungen so angeordnet, daß die Schaber in jeder Drehstellung der Schaberwelle über mehrere, längs des Schabers verteilte Erhebungen an der inneren Umfangsfläche der Kammer abgestützt sind. Auf diese Weise wird verhindert, daß der mit hoher radialer Kraft nach außen vorgespannte Schaber sich ausschließlich am relativ dünnwandigen Boden der Vertiefungen abstützen kann, was zu Schäden führen könnte. Die Vertiefungen können durch eine Vielzahl Umfangsnuten oder durch wenigstens eine schraubenlinienförmig den Filterkörper umschließende Nut gebildet sein. Die auf diese Weise zwischen den Nuten gebildeten, im wesentlichen in Umfangsrichtung verlaufenden Stege verbessert zudem die Berstsicherheit des Filterkörpers. Die Schaber verlaufen in diesem Fall schräg oder quer zu den Nuten. Anstelle von Nuten können auch eine Vielzahl Vertiefungen, insbesondere in einem gleichmäßigen Raster vorgesehen, beispielsweise eingebohrt sein, die entlang der äußeren Umfangsfläche des Filterkörpers allseitig durch Erhebungen voneinander getrennt sind. Die ineinander übergehenden Erhebungen bilden ein Netz, welches den Filterkörper sowohl axial als auch in Umfangsrichtung aussteift.

Es hat sich gezeigt, daß der Filterinnenmantel nur dann hinreichend vom Rückstandsmaterial gesäubert werden kann, wenn die Schaber exakt der Form des Filterinnenmantels angepaßt und mit hoher Anpreßkraft gegen den Innenmantel gedrückt werden. Hierzu müssen die Schaber radial beweglich an der Schaberwelle geführt sein, so daß sie eventuellen Unebenheiten des Filterinnenmantels folgen können. Versuche haben nun gezeigt, daß das Rückstandsmaterial die Schaber in ihren Führungen an der Schaberwelle festbäckt, so daß sie auch von starken Federn nicht mehr bewegt werden können. Die Schaber verlieren damit ihre Reinigungsfähigkeit.

Es ist ein weiteres Ziel der Erfindung einen konstruktiv einfachen Weg zu zeigen, wie das Festbacken der Schaber in der Schaberwelle verhindert werden kann.

Bei einer Trennvorrichtung der eingangs erläuterten Art wird die dadurch erreicht, daß jeder der in der Schaberwelle radial beweglich geführten Schaber über einen in einer engpassenden, radialen Bohrung der Schaberwelle verschiebbar geführten Stift vom Inneren der Schaberwelle her federnd nach radial außen vorgespannt ist. Der Stift hat einen relativ kleinen Durchmesser, womit die Spaltumfangslänge zwischen Stift und Bohrung relativ klein bleibt und gut abgedichtet werden kann. Die Spaltumfangslänge ist auf jeden Fall wesentlich kleiner als die Spaltumfangslänge der unmittelbar in der Schaberwelle geführten Schaber. Die Schaber können mit vergleichsweise großem Spiel in ihren Führungen sitzen, so daß sie nicht festbacken könne. Selbst wenn die Stifte in den Bohrungen festbacken sollten, können die Federn aufgrund der geringen Spaltumfangslänge den Widerstand überwinden.

Jeder der Stifte kann, von einer gesonderten Druckfeder beaufschlagt sein, die in einer radialen Bohrung der Schaberwelle sitzt, in die sie von außen her einsteckbar ist. In diesem Fall ist der Stift engpassend, jedoch radial verschiebbar in einer Hülse geführt, die ihrerseits in der Bohrung verschiebbar ist. Selbst wenn die Hülse in der Bohrung der Schaberwelle festbäckt, kann die Druckfeder die Klemmkräfte des eventuell in der Hülse festbackenden Stifts überwinden.

Zum Schutz der Druckfeder vor Rückstandsmaterial ist diese bevorzugt innerhalb der Hülse angeordnet und stützt sich an einem am radial inneren Ende der Hülse befestigten Druckstück ab. Das Druckstück ist gegen die Hülse abgedichtet und die Hülse ist bevorzugt mit flüssigem oder plastischem Material gefüllt, um das Eindringen von Rückstandsmaterial zwischen dem Stift und der Hülse zu verhindern.

Um den Filterkörper bei entspannten Druckfedern wechseln zu können, ist in der Schaberwelle bevorzugt eine Nockenstange mit radial abstehenden Nocken axial verschiebbar angeordnet. Die Druckfedern sind zwischen den Schabern und der Nockenstange angeordnet und können durch axiales Verschieben der Nocken relativ zu den Druckfedern gespannt bzw. entspannt werden.

Die Schaber müssen, wie bereits erwähnt, mit relative hoher Kraft gegen den Innenmantel des Filterkörpers gedrückt werden. Für entsprechend starke Druckfedern ist vielfach im Inneren der Schaberwelle kein Platz. In einer bevorzugten Ausführungsform ist deshalb vorgesehen, daß jeder Stift mit einem Kolben in Verbindung steht, der in einem auf der radial innen gelegenen Seite des Stifts in der Schaberwelle angeordneten Hydraulik- oder Pneumatikzylinder radial verschiebbar ist. Der Kolben kann hierbei durch das radial innere Ende des Stifts gebildet sein, oder es kann ein gesonderter Kolben vorgesehen sein. Um hohe Druckkräfte erzeugen zu können, ist der Kolbendruckmesser vorzugsweise größer als der Durchmesser des Stifts im Bereich der ihn führenden Bohrung. Sämtliche Zylinder werden zweckmäßigerweise aus einer gemeinsamen Hydraulik- bzw. Pneumatikdruckquelle gespeist.

Der Rückstandsmaterial wird der Einfachheit halber axial aus dem Ringraum zwischen Schaberwelle und Filterkörper abgeführt. Dies bedingt allerdings relativ große Wege, über die das Rückstandsmaterial transportiert werden muß. Bei manchen Anwendungsfällen reicht die Reinigungswirkung der Schaber für derartig lange Transportwege nicht aus, so daß der Filterkörper bereits nach kurzer Betriebszeit verstopft und unbrauchbar wird. Enthält das Rückstandsmaterial zusätzlich sehr harte Rückstände, wie z.B. Chrom oder dergleichen, werden darüber hinaus die Schaber und der Filterkörper stark beansprucht, so daß sie bereits nach kurzer Betriebszeit unbrauchar werden können.

Ein weiteres Ziel der Erfindung ist es, die eingangs erläuterte bekannte Trennvorrichtung so zu verbessern, daß das Rückstandsmaterial auch im Dauerbetrieb vollständig von der Filterinnenseite entfernt werden kann und das Verstopfen und die übermäßige Abnutzung des Filterkörpers durch Rückstandsansammlungen vermieden wird. Dies wird dadurch erreicht, daß in der Umlaufbahn oder deren Umfangsverlängerung des bzw. der Schaber jeweils wenigstens eine Auslaßöffnung des zweiten Materialauslasses vorgesehen ist, die den Filterkörper radial durchbricht.

Im Gegensatz zu herkömmlichen Trennvorrichtungen, bei welchen die Reinigungsschnecke das Rückstandsmaterial während mehrerer Umdrehungen über die gesamte axiale Länge des Filterkörpers abtransportiert, fördern die Schaber gemäß der vorstehenden Verbesserung das Rückstandsmaterial auf kürzestem Wege zum Materialauslaß. Das Rückstandsmaterial muß von der Filterfläche nicht abgehoben werden, sondern kann den Filterinnenraum durch die Filterfläche hindurch verlassen.

In einer bevorzugten Ausführungsform der letztgenannten Verbesserung ist vorgesehen, daß ein Reversierantrieb die Schaberwelle mit wechselnder Drehrichtung über einen vorgegebenen Drehwinkel kleiner als 360° hin und her bewegt und daß jede der Auslaßöffnungen in Umfangsrichtung außerhalb durch diesen Drehwinkel bestimmten Bewegungsbahnen der Schaber anschließend angeordnet ist. Die Schaber werden damit nicht über die Auslaßöffnung hinwegbewegt, sondern vorzugsweise nur bis an deren Rand. Aufgrund der wechselnden Drehrichtung wird der Filterinnenmantel besser gereinigt. Zweckmäßigerweise werden Schaber mit gesonderten Schabkanten für die beiden Drehrichtungen eingesetzt.

Die Schaberwelle trägt vorzugsweise mehrere, in axialer Richtung nebeneinander, jedoch höchstens um die axiale Breite ihrer Bewegungsbahnen gegeneinander versetzt angeordnete Schaber. Jeder der Schaber bestreicht lediglich einen Teil der Filterinnenmantels. Die Gesamtheit der Schaber reinigt jedoch den Innenmantel vollständig. Aufgrund der dadurch erreichten Segmentierung der Schabkanten, läßt sich die Kontur der Kanten besser dem Filterinnenmantel anpassen und besser andrücken.

In einer zweickmäßigen Ausführungsform ist vorgesehen, daß jedem Schaber eine Auslaßöffnung zugeordnet ist und daß in axialer Richtung nebeneinander angeordnete Schaber und Auslaßöffnungen in Umfangsrichtung um 180° versetzt angeordnet sind. Die insbesondere als axial verlaufende Schlitze ausgebildeten Auslaßöffnungen überdecken damit lediglich einen Teil der gesamten axialen Länge, was der Festigkeit des Filterkörpers zugute kommt.

Die Schaber können jedoch auch in axialer Richtung in einer Reihe eng benachbart nebeneinander angeordnet sein. Diese Anordnungsweise ist insbesondere dann von Vorteil, wenn am Umfang um 180° versetzt zwei Reihen von in radialer Sicht zickzackförmig nebeneinander angeordneten Schabern vorgesehen sind. Die Eckpunkte der zickzackförmigen Reihen sollen in Umfangsrichtung paarweise spiegelbildlich gegenüberliegen, da dann zwei um 180° im Umfangsrichtung versetzte Reihen von Auslaßöffnungen vorgesehen werden können, bei welchen die Auslaßöffnungen jeder Reihe mit axialem Abstand voneinander und axial versetzt zu den Auslaßöffnungen der anderen Reihe angeordnet sind. Auch hier erstreckt sich jede Auslaßöffnung nur über einen Teil der axialen Länge des Filterkörpers. Darüber hinaus müssen die Schaber den Materialrückstand nur über einen Weg von weniger als 180° abführen. Die zickzackförmige Anordnungsweise der Schaber erlaubt Auslaßöffnungen mit relativ großem Querschnitt und damit das Abtrennen von relativ großen Feststoffstücken. Optimal geeignet sind Auslaßöffnungen mit rautenförmigen Querschnitt.

Der Materialauslaß für das Rückstandsmaterial muß Rückstaueigenschaften haben, um zu verhindern, daß aufgrund des hohen Drucks in dem Filterkörper das an sich fließfähige Rückstandsmaterial mit einem zu hohen Anteil an ungefiltertem Material abströmen kann. Für die Trennung von Materialgemischen, die thermoplastischen Kunststoff enthalten, kann dies in der Weise erfolgen, daß der zweite Materialauslaß das Rückstandsmaterial über wenigstens einen mittels einer Kühleinrichtung abkühlbaren Kühlkanal abführt, an dessen Auslaßende eine Querschnittsverengung vorgesehen ist. Die Kühleinrichtung kühlt das Rückstandsmaterial zu einer dem Innendruck des Filterkörpers widerstehenden Masse ab, die sich an der Querschnittsverengung abstützen kann und somit den Kühlkanal verschließt. Um einen ungehinderten Abfluß des Rückstandsmaterials, insbesondere im Bereich der Kühleinrichtung sicherzustellen, erweitern sich die Kanäle des zweiten Materialauslasses konisch in Abflußrichtung.

Der Durchsatz an Rückstandsmaterial wird zweckmäßigerweise thermisch gesteuert. Dies kann durch Regelung der Kühleinrichtung erfolgen oder aber durch eine zusätzliche Heizeinrichtung im Bereich der Querschnittsverengung des Kühlkanals. Die Temperaturregelung erfolgt bevorzugt abhängig vom Druck des Materialgemisches in dem Filterkörper. Steigt der Druck an, so wird die Kühlleistung der Kühleinrichtung erniedrigt bzw. die Heizleistung der Heizeinrichtung erhöht, um den Abfluß des Rückstandsmaterials zu erleichtern. Beim Absinken des Filterinnendrucks wird im entsprechend umgekehrten Sinn geregelt.

Zur Regelung des Rückstandsmaterialabflusses kann im zweiten Materialauslaß auch eine Dosierschnecke vorgesehen sein. Soweit nicht bereits die Staueigenschaften der Dosierschnecke zur Erzeugung eines ausreichenden Filterinnendrucks genügt, kann wiederum eine Kühleinrichtung vorgesehen sein, die das Rückstandsmaterial im Berich der Dosierschnecke, insbesondere an deren Ausgang zu einer dem Filterinnendruck wider-

stehenden Masse abkühlt. Die erstarrte Masse stützt sich hierbei an den Windungen der Schnecke ab. Im Schneckenmantelrohr ist im Bereich des Auslaßendes bevorzugt wenigstens eine axiale Nut vorgesehen, die das Mitdrehen der in der Schencke erstarrten Rückstandsmasse mit der Schnecke verhindert. Der Rückstandsmaterialdurchsatz läßt sich über die Temperatur der Kühleinrichtung aber auch über die Drehzahl der Dosierschnecke regeln. Die Regelung kann wiederum abhängig vom Filterinnendruck erfolgen. Soweit der Materialdrückstand Metall enthält, erfolgt die Regelung der Temperatur der Kühleinrichtung oder der Drehzahl der Dosierschnecke bevorzugt abhängig vom Metallanteil des Rückstandsmaterials, der sich zweckmäßigerweise mit einem kapazitiven Sensor messen läßt.

Die Dosierschnecke kann so ausgebildet sein, daß sie das Rückstandsmaterial im gesamten Umfangsbereich ihres Schneckenmantelrohrs abfördert. Da des Rückstandsmaterial im Bereich der Dosierschnecke abzukühlen ist, kann dies im Einzelfall zu relativ langen und konstruktiv aufwendigen Schneckenkonstruktionen führen. Von Vorteil können deshalb Ausführungsformen sein, bei welchen der zweite Materialauslaß mehrere über den Umfang der Dosierschnecke verteilte Auslaßkanäle umfaßt, in die die Dosierschnecke über einen Teil der radialen Weite der Kanäle eingreift. Die Auslaßkanäle können problemlos so weit bemessen sein, daß auch relativ große Materialabfälle, beispielsweise Metallabfälle im Rückstandsmaterial enthalten sein können. Trotzdem wird die Abkühlung des Rückstandsmaterials in den Auslaßkanälen erleichtert. Das Rückstandsmaterial wird zweckmäßigerweise bereits vor Erreichen der Dosierschnecke bereits weitgehend abgekühlt. Die Auslaßgeschwindigkeit wird durch die Drehzahl der Dosierschnecke gesteuert, deren Gängesich in das Rückstandsmaterial eingraben und es zur Erzeugung eines ausreichenden Filterinnendrucks stauen. Die Dosierschnecke steht vorzugsweise über einen Freilauf mit der Schaberwelle in Antriebsverbindung.

Der Filterinnendruck der Trennvorrichtung erreicht, insbesondere beim Trennen thermoplastischer Kunststoffe sehr hohe Werte, beispielsweise in der Größenordnung 500 bar. Um Axialdrücke auf die Schaberwelle in dieser Größenordnung zu vermeiden, ist die Schaberwelle axial beiderseits des Filterkörpers bevorzugt an gleich großen Wellendurchmessern in dem Gehäuse gelagert.

Konstruktiv einfache Ausführungsformen ergeben sich, wenn die Schaberwelle einen Rahmenteil des Gehäuses durchsetzt, an dem auf der axial einen Seite der Filterkörper gehalten ist und auf der axial anderen Seite die Schaberwelle mit einem Antrieb gekuppelt ist. Der zwischen der Schaberwelle umd dem Filterkörper gebildete Ringraum setzt sich zweckmäßigerweise zwischen der Schaberwelle und einer Wellendurchtrittsöffnung in dem Rahmenteil fort. Ein Zuführkanal der Fördereinrichtung mündet quer in diesen sich fortsetzenden Ringraum ein. Auch die Kanäle des ersten Materialauslasses, über die das gefilterte Material abgeführt wird, verlaufen zumindest abschnittsweise dadurch den Rahmenteil. Zwischen dem Rahmenteil und dem Filterkörper kann hierzu ein Sammelringkanal vorgesehen sein, in den die Kanäle des ersten Materialauslasses münden und über den sie mit Auslaßdüsen verbunden sind. Die Zufuhr und Abfuhr des Materials erfolgt von derselben axialen Seite des Filterkörpers, der damit mit geringem Zeitaufwand ausgewechselt werden kann.

Im folgenden sollen Ausführungsbeispiele der Erfindung anhand von Zeichnungen näher erläutert werden. Es zeigt

Fig. 1 einen schematischen Axiallängsschnitt durch eine erste Ausführungsform einer Trennvorrichtung für Materialgemische, welche thermoplastischen Kunststoff enthalten;

Fig. 2 eine Teilansicht, gesehen im Axiallängsschnitt durch den Filterkörper der Trennvorrichtung gemäß Fig. 1;

Fig. 3 eine nicht maßstabsgerecht vergrößerte Seitenansicht des Filterkörpers der Trennvorrichtung nach Fig. 1;

Fig. 4 eine teilweise Draufsicht auf die Außenfläche einer anderen Ausführungsform eines in der Trennvorrichtung nach Fig. 1 verwendbaren Filterkörpers;

Fig. 5 einen schematischen Axiallängsschnitt durch eine zweite Ausführungsform einer Trennvorrichtung für Materialgemische, welche thermoplastischen Kunststoff enthalten;

Fig. 6 einen Schnitt entlang der Linie VI—VI durch die Trennvorrichtung nach Fig. 5;

Fig. 7 einen schematischen Axiallängsschnitt durch eine weitere Ausführungsform einer Trennvorrichtung für Materialgemische, welche thermoplastischen Kunststoff enthalten;

Fig. 8 einen Axialquerschnitt durch die Trennvorrichtung nach Fig. 7 entlang einer Linie VIII—VIII;

Fig. 9 einen Axialquerschnitt durch eine Schaberwelle der Trennvorrichtung nach Fig. 7, gesehen entlang einer Linie IX—IX;

Fig. 10 die schematische Abwicklung des Umfangsmantels einer anderen Ausführungsform einer Schaberwelle, insbesondere zur Verwendung bei einer Trennvorrichtung nach Fig. 7;

Fig. 11 einen schematischen Teilschnitt durch eine Trennvorrichtung mit von der Trennvorrichtung nach Fig. 7 abweichendem Materialauslaß für das Rückstandsmaterial und

Fig. 12 einen Schnitt entlang der Linie XII—XII durch die Trennvorrichtung nach Fig. 11.

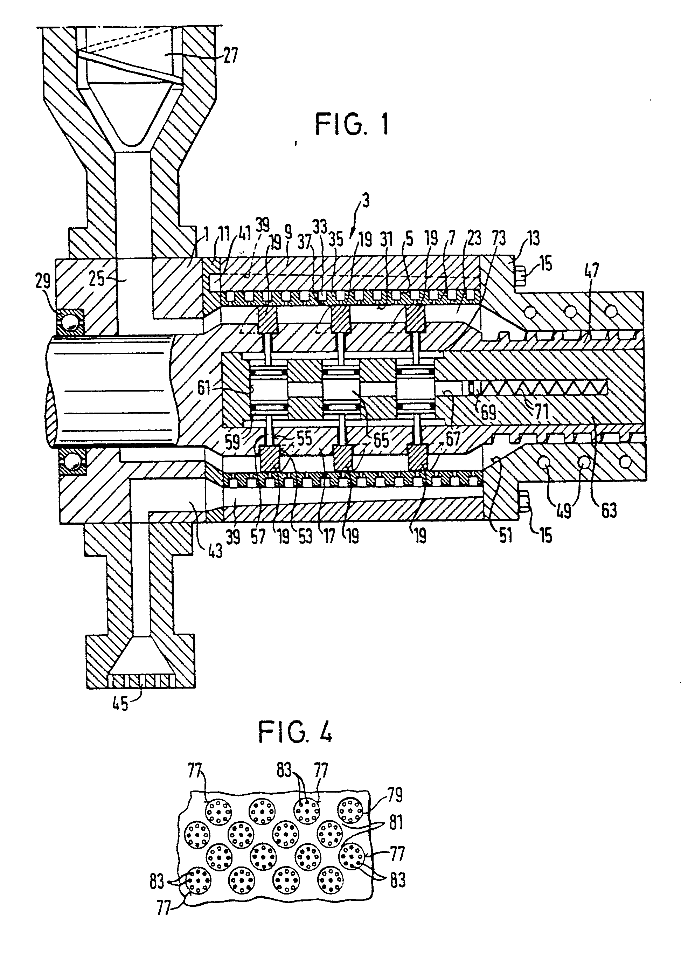

Fig. 1 zeigt eine Trennvorrichtung zur Wiederaufbereitung von Gemischen aus thermoplastischem Kunststoff und Materialabfällen mit höherem Schmelzpunkt, insbesondere Metallabfällen, insbesondere Kupfer oder Aluminiumabfällen, wie sie z.B. in der Verpackungs- und Kabelindustrie anfallen. An einem der Befestigung dienenden Rahmenteil 1 ist ein Filterkopf 3 befestigt, der in einer zylindrischen Kammer 5 einen hohlzylindrischen Filterkörper 7 enthält. Die Kammer 5 wird durch einen im wesentlichen zylindrischen Gehäuseteil 9, eine Stirnscheibe 11 des Rahmenteils 1 und einem Lagerdeckel 13 an der dem Rahmenteil 1 axial abgekehrten Seite nach außen hin begrenzt. Der Lagerdeckel 13 und der Gehäuseteil 9 sind durch axiale Schraubbolzen 15 an dem Rahmenteil 1 befestigt. In dem Rahmenteil 1 und dem Lagerdeckel 13 ist auf axial gegenüberliegenden Seiten des Filterkörpers 7 eine Schaberwelle 17 drehbar, gleichachsig zum Filterkörper 7 gelagert.

Die Schaberwelle 17 trägt an ihrem Umfang zwei um 180° gegeneinander versetzte Reihen von Schabern 19, die mit axialem Abstand voneinander am Innenmantel des Filterkörpers 7 mit hoher Andruckkraft federnd anliegen. Die Schaber 19 verlaufen jeweils schräg zur Umfangsrichtung, in den Reihen jedoch parallel zueinander. Die Schaber 19 der beiden Reihen liegen sich paarweise diametral gegenüber und sind zum Umfangsrichtung derart geneigt, daß sie bei der Drehung der Schaberwelle 17 zum Lagerdeckel 13 hin fördern.

Der Durchmesser der Schaberwelle 17 ist im Bereich des Filterkörpers 7 kleiner als der Innendurchmesser des Filterkörpers 7, so daß im Bereich des Filterkörpers 7 ein Ringraum 23 entsteht. Der Ringraum 23 setzt sich in den Rahmenteil 1 hinein fort und ist innerhalb des Rahmenteils 1 über einen radial zur Schaberwelle 17 verlaufenden Kanal 25 mit einem das Kunststoffmaterialgemisch plastifizierenden und unter hohem Druck zuführenden Extruder 27 verbunden. Die Schaberwelle 17 ist beiderseits des Ringraums 23 an gleich großen Wellendurchmessern im Lagerteil 1 bzw. dem Lagerdeckel 13 gelagert, um keine Axialdruckkräfte aufnehmen zu müssen. 29 bezeichnet ein radiales Hauptlager der Schaberwelle 17 auf der dem Filterkopf 3 axial fernen Seite des Rahmenteils 1. Auf dieser Seite tritt die Schaberwelle 17 aus dem Rahmenteil 1 aus und ist mit einer nicht näher dargestellten Antriebsvorrichtung verbunden.

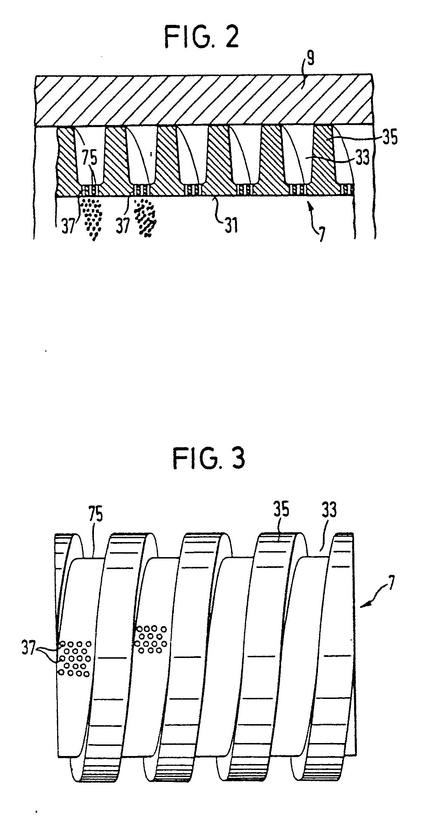

Der Filterkörper 7 besteht aus einem einzigen, rohrförmigen Materialstück mit einem glatten Innenmantel 13 und einem Außenmantel in den eine Vielzahl paralleler Umfangsnuten 33 eingearbeitet sind. Zwischen den Nuten 33 verbliebene Umfangsstege 35 stützen sich am Innenmantel der Kammer 5 ab und leiten die Anpreßkräfte der Schaber 19 auf den Gehäuseteil 9 ab. In den Nuten 33 sind eine Vielzahl radialer Filteröffnungen 37 vorgesehen, wie dies in den Fig. 2 und 3 im einzelnen dargestellt ist.

Die Ringnuten 33 stehen mit axialen Nuten 39 am Innenmantel der Kammer 5 in Verbindung, die ihrerseits in einen Ringkanal 41 der Stirnscheibe 11 münden. Von dem Ringkanal 41 verläuft innerhalb des Rahmenteils 1 ein Kanal 43 zu einem Auslaßdüsenkopf 45.

Der thermoplastische Kunststoff des vom Extruder 27 in den Ringraum 23 eingepreßten Materialgemisches tritt durch die Filteröffnungen 37 des Filterkörpers 7 in die Ringnuten 33, von wo er über die Kanäle 39, den Ringkanal 41, den Kanal 43 und den Auslaßdüsenkopf 45 abgeführt wird.

Das die Feststoffabfälle enthaltende Rückstandsmaterial sammelt sich am Innenmantel des Filterkörpers 7. Es wird von den Schabern 19 zu einer gleichachsig mit der Schaberwelle 17 angeordneten und drehfest mit dieser verbundenen Rückstauschnecke 47 transportiert. Eine Kühleinrichtung, angedeutet durch Kühlkanäle 49 kühlt die thermoplastischen Restbestandteile des Rückstandsmaterials in den Schneckengängen der Rückstauschnecke soweit ab, daß es vom Druck der plastifizierten Masse des Filterinnenraums nicht ausgeschoben werden kann. Die Ausschubgeschwindigkeit wird im wesentlichen durch die Drehzahl der Rückstauschnecke 47 bestimmt. Der Ringraum 23 ist im Bereich des Schneckenanfangs der Rückstauschnecke 47 zu einem Einführkonus 51 verjüngt, der den Umfangsmantel der Rückstauschnecke 47 überlappt und das Rückstandsmaterial radial von außen in die ersten Schneckengänge einführt, um einem Verstopfen des Schneckeneingangs vorzubeugen.

Die Schaber 19 sitzen radial verschiebbar geführt in schräg zur Umfangsrichtung verlaufenden Nuten 53 der Schaberwelle 17. In die Nut 53 mündet eine radiale Bohrung 55, in der engpassend ein Stift 57 radial verschiebbar geführt ist. Der Stift 57 hat eine wesentliche kleinere Querschnittsfläche als die Bodenfläche der Nut 53, um das Festbacken zu verhindern. Der Stift 57 jedes Schabers 19 stützt sich an einem Kolben 59 ab, der in einer radialen Zylinderbohrung 61 eines zylindrischen, gleichachsig in der Schaberwelle enthaltenen Einsatzes 63 vorgesehen ist. Die Kolben 59 dichten einen mit Hydraulikflüssigkeit gefüllten, gemeinsamen Hydraulikraum 65 des Einsatzes 63 nach außen ab. Der Hydraulikraum 65 ist mit einem Zylinder 67 verbunden, in dem ein Kolben 69 von einer Druckfeder 71 vorgespannt ist. Die Fläche des Kolbens 69 ist kleiner als die Fläche jedes der Kolben 59, um eine Kraftübersetzung der von der Druckfeder 71 erzeugten und über die Stifte 57 auf die Schaber 19 wirkenden Kräfte zu erzeugen. Die Druckfeder 71 kann entspannt werden, um den Filterkörper 7 bei entlasteten Schabern 19 auswechseln zu können. Anstelle der Druckfeder 71 kann auch ein Gasdruckspeicher oder dergleichen zur Erzeugung der federnden Anpreßkräfte benutzt werden. Der Einsatz 63 hat insbesondere im Bereich des Filterkörpers 7 einen kleineren Durchmesser als die ihn umgebende Öffnung der Schaberwelle 17. Es entsteht auf diese Weise ein kühlender Ringraum, der gegebenenfalls zusätzlich an einem Kühlkreislauf angeschlossen sein kann.

Die Abflußgeschwindigkeit des Rückstandsmaterials aus der Rückstauschnecke 47 kann über die Kühlleistung der Kühleinrichtung 49 gesteuert werden. Die Kühlleistung wird vorzugsweise abhängig vom Innendruck des plastifizierten Materials, insbesondere im Ringraum 23 gesteuert. Soweit das Rückstandsmaterial Metallabfälle enthält, kann die Temperatursteuerung auch abhängig vom Materialanteil erfolgen.

Die Fig. 2 und 3 zeigen Einzelheiten des Filterkörpers 7. De Umfangsnuten 33, die im dargestellten Ausführungsbeispiel durch eine einzige, schraubenlinienförmige Nut gebildet sind, sind in den Außenmantel eines aus einem einzigen Materialstück bestehenden Hohlzylinders beispielsweise durch spanabtragende Fertigung oder Schleifen eingearbeitet. Die Umfangsnuten 33 können jedoch auch in Umfangsrichtung ringförmig geschlossen sein, bzw. es können mehrere parallel zueinander verlaufende schraubenlinienförmige Nuten vorgesehen sein. Die zwischen den Nuten 33 verbliebenen Umfangsstege 35 stützen sich am Mantel des Gehäuseteils 9 ab. Der verglichen mit der radialen Höhe der Umfangsstege 35 dünnwandige Boden 75 jeder Umfangsnut 33 weist eine Vielzahl Filterlöcher 37 auf, über die das gefilterte Material abgeführt wird. Die Filterlöcher 37 sind in mehreren Reihen längs der Umfangsnuten 33 angeordnet, wobei benachbarte Reihen in Nutlängsrichtung Lücken gegeneinander versetzt sind.

Der Lochdurchmesser der Filterlöcher ist kleiner als 0,2 mm, vorzugsweise etwa 0,1 mm gewählt. Um derartig kleine Lochdurchmesser wirtschaftlich mit Laser- oder Elektronenstrahlbearbeitungsverfahren herstellen zu können, ist die radiale Dicke des Bodens 75 jeder Umfangsnut 33 höchstens gleich dem zehnfachen Lochdurchmesser bemessen. Die Querbreite jeder Nut 33 ist so gewählt, daß der Boden 75 durch die benachbart anschließenden Bereiche der Umfangsstege 35 trotz einer geringen Wanddicke selbst für hohe Filterinnendrücke im Bereich von 200 bis 500 bar ausgesteift wird. Bei Bodenwandstärken in der Größenordnung von 1 mm haben sich Querabmessungen der Nuten 33 in Achsrichtung des Filterkörpers 7 von etwa 2 mm als brauchbar erwiesen, um trotz der Belastung durch den Filterinnendruck den Innenmantel 31 formstabil und damit durch Schaber reinigbar zu halten. Die Schaber verlaufen in jedem Fall schräg oder quer zu den Nuten.

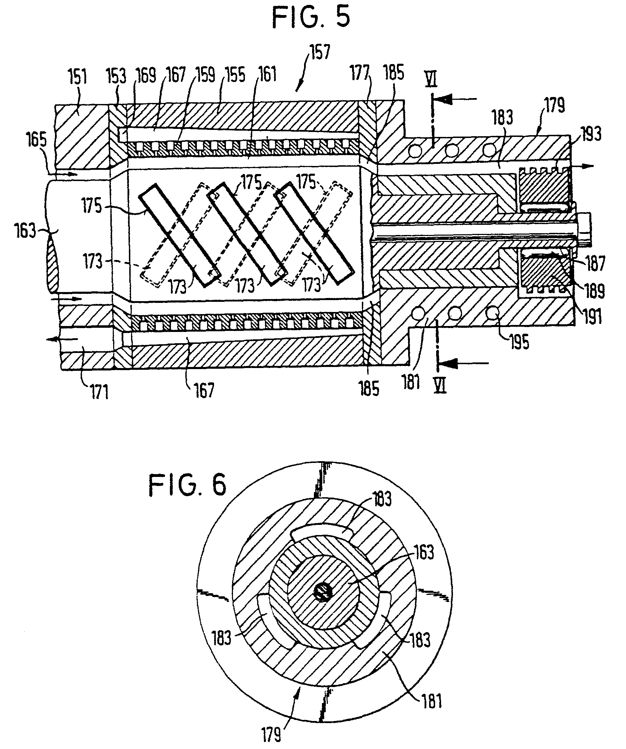

Fig. 4 zeigt eine andere Ausführungsform eines Filterkörpers, bei der anstelle der Ringnuten in einem Raster angeordnete Vertiefungen 77 im Außenmantel eines aus einem einzigen Materialstück bestehenden, hohlzylindrischen Filterkörpers 79 eingearbeitet, beispielsweise eingebohrt sind. Die Vertiefungen 77 sind in der Fläche des Außenmantels des Filterkörpers 79 allseitig durch ein Netz von Stegen 81 voneinander getrennt, welches sich am Innenmantel der den Filterkörper 79 umschließenden Gehäusekammer abstützen und, entsprechend der Trennvorrichtung nach Fig. 1 den radialen Anpreßdruck der Schaber auf das Gehäuse ableiten. Der Durchmesser der Vertiefungen 77 und ihr gegenseitiger Abstand ist so gewählt, daß die Stege 81 aussteifend auf die Böden der Vertiefungen 77 wirken. Darüber hinaus ist die Verteilung der Stege 77 so gewählt, daß sich jeder der Schaber der Trennvorrichtung wiederum in jeder Drehstellung der Schaberwelle über mehrere Stege 81 gemeinsam abstütz, um Schäden an den Böden der Vertiefungen 77 zu vermeiden. Die Böden der Vertiefungen enthalten jeweils eine Vielzahl Filterlöcher 83 mit einem Durchmesser zwischen 80 und 200 µm. Der Boden

jeder Vertiefung 77 ist höchstens 10 mal so dick wie der Lochdurchmesser der durch Laser- bzw. Elektronenstrahlbearbeitungsverfahren hergestellten Filterlöcher 83.

Die Fig. 5 und 6 zeigen eine andere Ausführungsform einer Trennvorrichtung mit einem Rahmenteil 151, an dem über einen Zwischenring 153 ein Gehäusezylinder 155 eines allgemein mit 157 bezeichneten Filterkopfs anschließt. Der Gehäusezylinder 155 umschließt einen hohlzylindrischen Filterkörper 159, welcher unter Bildung eines Ringraums 161 gleichachsig drehbar von einer Schaberwelle 163 durchsetzt ist. Der Ringraum 161 setzt sich bis in den Rahmenteil 151 fort, wo von einem nicht näher dargestellten Extruder das zu trennende Materialgemisch im Richtung eines Pfeils 165 mit hohem Druck zugeführt wird. Außerhalb des Filterkörpers 159 enthält der Gehäusezylinder 155 axial verlaufende Kanäle 167, die einen Ringkanal 169 des Zwischenrings 153 münden. Der Ringkanal 169 ist über einen im Rahmenteil 151 verlaufenden Kanal 171 mit einem nicht näher dargestellten Auslaßdüsenkopf verbunden, über den das gefilterte Material abgeführt wird. Die Kanäle 167 erweitern sich in axialer Richtung zum Ringkanal 169 hin, um einen ungestörten Abfluß des gefilterten Materials sicherzustellen. Der Filterkörper 159 hat die anhand der Fig. 1 bis 4 erläuterte Gestaltung.

Die Schaberwelle trägt zwei um 180° gegeneinander versetzte Reihen von Schabern 173. Die Schaber 173 jeder Reihe sind mit axialem Abstand voneinander angeordnet und verlaufen jeweils schräg zur Umfangsrichtung, jedoch parallel zueinander. Die Schaber 173 der beiden Reihen liegen sich paarweise diametral gegenüber und sind zur Umfangsrichtung derart geneigt, daß sie bei Drehung der Schaberwelle 163 in gleicher axialer Richtung fördern.

Die Schaber 173 sitzen in Führungsnuten 175 und werden durch hydraulische oder pneumatische Kolben der anhand der Fig. 1 beschriebenen Art gespannt. Es wird insoweit auf die Beschreibung der Fig. 1 Bezug genommen.

An das dem Rahmenteil 151 axial gegenüberliegende Ende des Gehäusezylinders 155 schließt sich über einen Zwischenring 177 gleichachsig zur Schaberwelle eine Auslaßstaueinrichtung 179 an, die das mittels der Schaber 173 vom Innenmantel des Filterkörpers 159 abgetragene Rückstandsmaterial staut und so das Aufbauen eines hohen Filterinnendrucks ermöglicht. Die Auslaßstaueinrichtung 179 umfaßt einen am Gehäusezylinder 155 angeflanschten Hohlzylinder 181, in welchem das rahmenteilferne Ende der Schaberwelle 163 drehbar gelagert ist. Der Wellendurchmesser dieses Lagers ist wiederum gleich dem rahmenteilseitigen Lagerdurchmesser gewählt, um Axialdrücke auf die Schaberwelle 163 zu vermeiden. Der Innenmantel des Hohlzylinders 181 weist mehrere, hier drei, über den Umfang verteilte axial verlaufende Kanäle 183 auf (Fig. 6), die über Kanäle 185 des Zwischenrings 177 mit dem Ringraum 161 zwischen dem Filterkörper 159 und der Schaberwelle 163 verbunden sind. Die Kanäle 183 erweitern sich zum Auslaßende hin. An einem Ansatz 187 am austrittsseitigen Ende der Schaberwelle 163 ist über ein Freilaufrollengetriebe 189 ein Schneckenrad 191 mit vorgegebenem Drehsinn drehbar gelagert. Die Schnekkenwendel 193 des Schneckenrads 191 ragen in die Kanäle 183 hinein und graben sich in das über die Kanäle 183 abfließende Rückstandsmateral ein. Der thermoplastische Kunststoffanteil des Rückstandsmaterials wird von einer durch Kühlkanäle 195 angedeuteten Kühleinrichtung zu einer an den Schneckengängen 193 sich stauenden Masse abgekühlt.

Die Schaberwelle 163 wird mit wechselndem Drehsinn angetrieben, wobei das Verhältnis der Drehungen pro Drehrichtung aufgrund der Freilaufeigenschaften der Schnecke 191 den Abtransport des verfestigten Rückstandsmaterials durch die mit Freilaufeigenschafen in einer der Drehrichtung ausgestatteten Schnecke 191 bestimmt. Die Schneckenwendel 193 "schrauben" damit das in den Kanälen 183 erstarrte Rückstandsmaterial heraus.

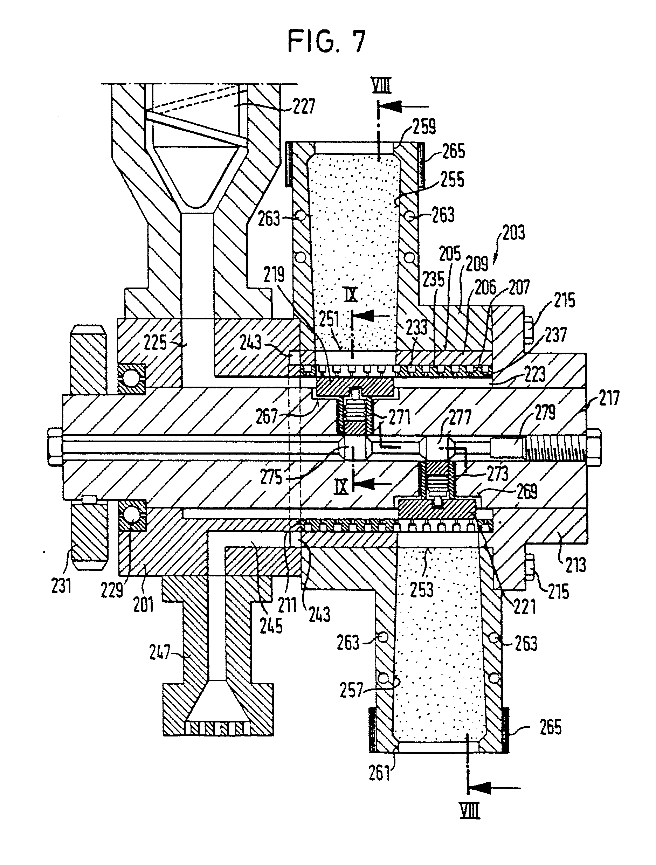

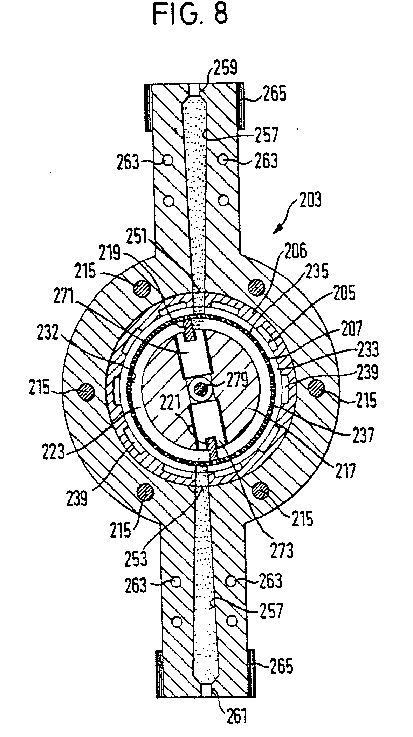

Die Fig. 7 und 8 zeigen eine andere Ausführungsform einer Trennvorrichtung zur Wiederaufbereitung von Gemischen aus thermoplastischem Kunststoff und Materialabfällen mit höherem Schmelzpunkt. Mittels dieser Trennvorrichtung lassen sich insbesondere sehr harte, abrasive Metallabfälle, wie z.B. Chromabfälle und dergleichen, abtrennen. An einem der Befestigung dienenden Rahmenteil 201 ist ein Filterkopf 203 befestigt, der in einer zylindrischen Kammer 205 eines Hohlzylinders 206 einen hohlzylindrischen Filterkörper 207 enthält. Die Kammer 205 wird durch den von einem im wesentlichen zylindrischen Gehäuseteil 209 aufgenommenen Hohlzylinder 206 einer Stirnfläche 211 des Rahmenteils 201 und einem Lagerdeckel 213 auf der dem Rahmenteil 201 axial abgekehrten Seite nach außen hin begrenzt. Der Lagerdeckel 213 und er Gehäuseteil 209 sind durch axiale Schraubbolzen 215 an dem Rahmenteil 201 befestigt. In dem Rahmenteil 201 und dem Lagerdeckel 213 ist auf axial gegenüberliegenden Seiten des Filterkörpers 207 eine Schaberwelle 217 drehbar, gleichachsig zum Filterkörper 209 gelagert. Die Schaberwelle 217 trägt an ihrem Umfang nachstehend noch näher erläuterte Schaber 219, 221, die axial und im Umfangrichtung gegeneinander versetzt am Innenmantel des Filterkörpers 207 federbelastet anliegen. Der Durchmesser der Schaberwelle 217 ist im Bereich des Filterkörpers 207 kleiner als der Innendurchmesser des Filterkörpers 267, so daß im Bereich des Filterkörpers 207 ein Ringraum 223 entsteht. Der Ringraum 223 setzt sich in den Rahmenteil 201 hinein fort und ist innerhalb des Rahmenteils 201 über einen radial zur Schaberwelle 217 verlaufenden Kanal 225 mit einem das Kunststoffmaterialgemisch plastifizierenden und unter hohem Druck zuführenden Extruder 227 verbunden. Die Schaberwelle 217 ist beiderseits des Ringraums 223 an gleich großen Wellendurchmessern im Lagerteil 201 bzw. dem Lagerdeckel 213 gelagert, um keine Axialdruckkräfte aufnehmen zu müssen. 229 bezeichnet ein radiales Hauptlager der Schaberwelle 217 auf der dem Filterkopf 203 axial fernen Seite des Rahmenteils 201. Auf dieser Seite tritt die Schaberwelle 217 aus dem Rahmenteil 201 aus und ist, beispielsweise über ein Zahnrad 231, mit einer nicht näher dargestellten Antriebsvorrichtung verbunden.

Der Filterkörper 207 besteht entsprechend der Ausführungsform nach Fig. 1 aus einem einzigen, rohrförmigen Materialstück mit einem glatten Innenmantel 231 und einem Außenmantel in den eine Vielzahl paralleler Umfangsnuten 233 eingearbeitet sind. Zwischen den Nuten 233 verbliebene Umfangsstege 235 stützen sich am Innenmantel des Hohlzylinders 206 ab und leiten die Anpreßkräfte der Schaber 219, 221 auf den Gehäuseteil 209 ab. In den Nuten 233 sind eine Vielzahl radialer Filteröffnungen 237 vorgesehen, wie dies anhand der Fig. 2 und 3 im einzelnen erläutert wurde.

Die Ringnuten 233 stehen mit axialen Nuten 239 am Innenmantel des hohlen Stützzylinders 206 in Verbindung, die ihrerseits in einen Ringkanal 243 der Stirnseite 211 münden. Von dem Ringkanal 243 verläuft innerhalb des Rahmenteils 201 ein Kanal 245 zu einem Auslaßdüsenkopf 247.

Der thermoplastische Kunststoff in dem vom Extruder 227 in den Ringraum 223 eingepreßten Materialgemisches tritt durch die Filteröffnungen 237 des Filterkörpers 207 in die Ringnuten 235, von wo es über axiale Kanäle 241 den Ringkanal 243, den Kanal 245 und den Auslaßdüsenkopf 247 abgeführt wird.

Das die Festoffabfälle enthaltende Rückstandsmaterial sammelt sich am Innenmantel des Filterkörpers 207. Es wird von den Schabern 219, 221 zu Auslaßöffnungen 251, 253 transportiert, die den Filterkörper 207 radial durchbrechen. Die Auslaßöffnungen 251, 253 sind als axial verlaufende Schlitze ausgebildet und liegen in der Umfangsverlängerung der Bewegungsbahnen der Schaber 219, 221.

Jedem der Schaber 219, 221 ist eine dieser Auslaßöffnungen 251, 253 zugeordnet. Die Schaber fördern das Rückstandsmaterial damit auf kürzestem Weg zu den Auslaßöffnungen 251, 253.

Die Schaber 219, 221 sind in Achsrichtung der Schaberwelle 217 um ihre Breite gegeneinander versetzt, so daß die Gesamtheit der Schaber den gesamten Innenmantel des Filterkörpers 207 reinigt. Die Bewegungsbahnen der Schaber 219, 221 können sich gegebenenfalls axial geringfügig überlappen. Die Schaber erstrecken sich im wesentlichen in axialer Richtung der Schaberwelle 217.

Die Auslaßöffnungen 251, 253 erstrecken sich lediglich über einen Teil der axialen Länge des Filterkörpers 207. Axial benachbarte Auslaßöffnungen 251, 253 sind gegeneinander winkelversetzt, vorzugsweise um 180°, um die Festigkeit des Filterkörpers 207 nicht allzusehr zu schwächen.

Die Schaberwelle 217 wird in einer hin- und hergehenden Drehbewegung von weniger als 360° rotierend angetrieben, wobei die Schaber 219, 221 das Rückstandsmaterial in beiden Drehrichtungen zu den jeweils zugeordneten Auslaßöffnungen 251 bzw. 253 befördern. Der Drehwinkel ist so bemessen, daß die Schaber 219, 221 nicht über die Auslaßöffnungen 251, 253 hinwegbewegt werden. Entsprechend der Anordnungsweise der Auslaßöffnungen 251, 253 sind auch axial benachbarte Schaber um 180° winkelversetzt.

Im dargestellten Ausführungsbeispiel sind zwei Schaber vorgesehen; es können jedoch auch mehr Schaber vorhanden sein, wobei axial benachbarte Auslaßöffnungen und zugehörige Schaber auch unter einem kleineren Winkel als 180° gegeneinander winkelversetzt sein können.

An die Auslaßöffnungen 251, 253 des Filterkörpers 207 schließen sich im wesentlichen radial verlaufende Auslaßkanäle 255, 257 an, über die das Rückstandsmaterial abgeleitet wird. Die Auslaßkanäle 255, 257 sind an ihrem Auslaßende mit einer Querschnittsverengung 259 bzw. 261 versehen. Eine durch Kühlkanäle 263 angedeutete Kühleinrichtung kühlt den im Rückstandsmaterial enthaltenen Anteil an thermoplastischem Kunststoff zu einer festen Masse ab, die sich an der Querschnittsverengung 259 bzw. 261 abstützt. Die Querschnittsverengungen 259, 261 verhindern damit das ungestörte Abfließen des Rückstandsmaterials über die Auslaßöffnungen 255, 257, so daß sich aufgrund des Rückstaus der zum Trennen des Materialgemisches erforderliche hohe Filterinnendruck aufbauen kann. Um einen ungehinderten Abfluß des Rückstandsmaterials durch die Kanäle 255, 257 bis an die Querschnittsverengungen 259, 261 zu ermöglichen, erweitern sich die Kanäle 255, 257 zum Auslaßende hin konisch.

Im Bereich der Querschnittsverengung 259 bzw. 261 ist jeweils eine Heizeinrichtung 265 vorgesehen, deren Heizleistung abhängig vom Filterinnendruck über eine nicht näher dargestellte Regelschaltung geregelt wird. Die Regelschaltung kann zugleich auch die Kühlleistung der Kühleinrichtung 263 steuern. Als Führungsgröße der Regelung läßt sich anstelle des Filterinnendrucks auch ein anderer Parameter auswerten, bei metallhaltigen Rückstandsmaterialien, beispielsweise der Metallanteil, welcher insbesondere mittels eines kapazitiven Sensors gemessen werden kann.

Die Schaber 219, 221 müssen mit hoher radialer Kraft gegen den Innenmantel des Filterkörpers 207 gedrückt werden. Die Schaber 219, 221 sind hierzu in axial verlaufenden Aussparungen 267, 269 der Schaberwelle 217 radial beweglich geführt. In sich teleskopisch federnde Druckstempel 271, 273 spannen die Schaber 219, 221 federnd nach außen vor. Die Druckstempel 271, 273 sind zwischen den Schabern 219 bzw. 221 einerseits und radialen Nocken 275 bzw. 277 einer gleichachsig die Schaberwelle 217 durchsetzenden, axial verschiebbaren Nockenstange 279 andererseits eingespannt. Zum Einbau bzw. Wechseln des Filterkörpers 207 können die Druckstempel 271, 273 durch axiales Verschieben der Nockenstange 279 entspannt werden. Der Einbau des Filterkörpers 207 gestaltet sich damit sehr einfach. Dies insbesondere auch deshalb, weil der Kanal 225 des Extruders 227 und der Kanal 245 des Düsenkopfs 247 auf derselben axialen Seite des Filterkopfs 203 münden und der Filterkörper 207 zu einem als Einheit wechselbaren Paket zusammengebaut ist.

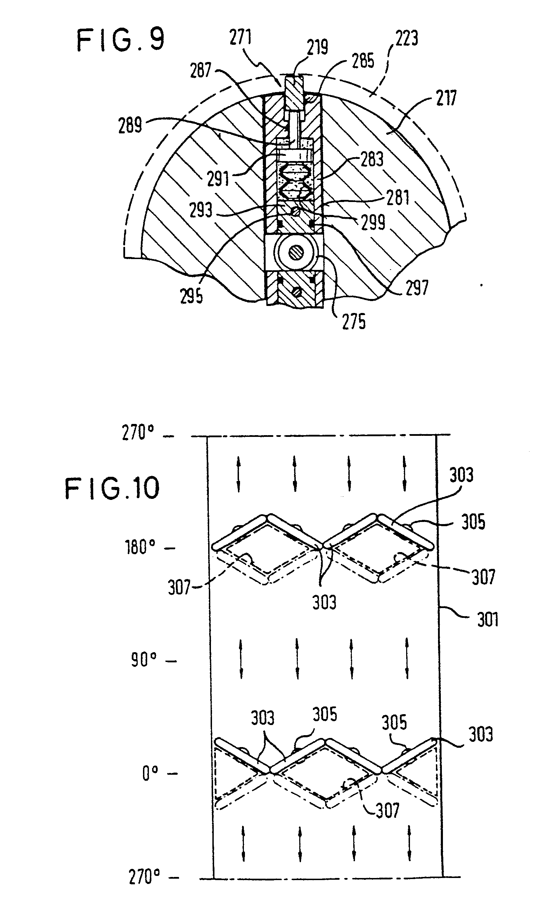

Fig. 9 zeigt Einzelheiten des Druckstempels 271. Der Druckstempel 273 ist in entsprechender Weise aufgebaut. Der Druckstempel 271 sitzt in einer radialen Bohrung 281 der Schaberwelle 217 und ist zusammen mit dem Schaber 219 radial von außen einsteckbar. Der Druckstempel 271 umfaßt eine in der Bohrung 281 verschiebbar geführte Hülse 283, die an ihrem radial äußeren Ende einen Führungsschlitz 285 für den Schaber 219 trägt. Radial innerhalb des Führungsschlitzes verengt sich die Hülse 283 zu einer Bohrung 287, in der engpassend jedoch radial verschiebbar ein Stift 289 sitzt, der mit seinem äußeren Ende am Schaber 219 anliegt und an seinem inneren Ende einen Kopf 291 trägt. Das innere Ende der Hülse 283 wird von einem Druckstück 293 verschlossen, welches mit einem Stift 295 in der Hülse 283 gehalten und von einem Dichtring 297 zur Hülse 283 hin abgedichtet ist. Zwischen dem Kopf 291 und dem Druckstück 293 ist ein Tellerfederpaket 299 eingespannt. Die vom Innenraum der Hülse 283 und dem Druckstück 293 umschlossene Kammer ist mit flüssigem oder plastischem Material ausgefüllt, welches das Eindringen des zu filternden Materialgemisches verhindert. Beim Einbau der Druckstempel 271, 273 sind die Tellerfederpakete 299 entspannt und die Stifte 291 nach radial außen gedrängt.

Die Druckstempel 271, 273 greifen in Querschnittsminderungen der Nockenstange 279 axial seitlich der Nocken 275, 277. Die Hülsen 283 können auf diese Weise insgesamt soweit in die Bohrungen 281 eingeschoben werden, daß die Schaber 219, 221 leicht gängig in den Filterkörper 207 eingeführt werden können. Durch axiales Verschieben der Nockenstange 279 werden die Hülsen 283 nach außen gedrängt und die Tellerfederpakete 299 über die Stifte 291 gespannt. Da der Umfang der Stifte 291 wesentlich kleiner ist als der Umfang der Hülsen 293, können die Stifte 291 im Dauerbetrieb nicht soweit festbacken, daß sie dem Druck der Tellerfederpakete 299 widerstehen würden. Die Stifte 291 und gegebenenfalls die Bohrungen 289 können paßgenau geschliffen sein. Da sich die Relativstellung der Hülse 283 nach dem Spannen nicht mehr ändert, wirkt sich Festbacken der Hülsen 283 an der Schaberwelle 217 im Dauerbetrieb nicht nachteilig aus.

Fig. 10 zeigt die Abwicklung einer anderen Ausführungsform einer Schaberwelle 301, wie sie beispielsweise bei einer Trennvorrichtung der Fig. 1 bis 3 eingesetzt werden kann. Die Schaberwelle 301 umfaßt zwei um 180° gegeneinander versetzte Reihen von Schabern 303, die an Druckstempeln 305 ähnlich den Druckstempeln der Fig. 9 radial beweglich gegen den Filterkörper vorgespannt sind. Die Schaber 303 jeder Reihe sind in Zickzackform angeordnet und zwar so, daß sich jeweils zwei Schaber diametral in einer schräg zur Drehachse der Schaberwelle 302 verlaufenden Ebene gegenüberliegen. Die Enden der Schaber 303 jeder Reihe berühren sich oder nähern sich bis auf einen geringen Abstand. Die Spitzen der zickzackförmigen Reihen liegen sich in Umfangsrichtung jeweils gegenüber.

Der nicht näher dargestellte Filterkörper weist zwei diametral gegenüberliegende Reihen von Auslaßöffnungen 307 auf, die in Fig. 10 gestrichelt angedeutet sind. Die Auslaßöffnungen sind in Achsrichtung der Schaberwelle 301 gegeneinander versetzt und liegen im wesentlichen in der Fortsetzung der Bewegungsbahnen der Spitzen der zickzackförmigen Schaberreihen.

Die Schaberwelle 301 wird von einem nicht näher dargestellten Drehantrieb um etwas weniger als 180° periodisch hin und herbewegt, wobei die Schaber 303 das Rückstandsmaterial auf dem relative kurzen Weg einer halben Umfangslänge zu den Auslaßöffnungen 307 befördern. Die Auslaßöffnungen 307 haben bevorzugt Rautenform und damit vergleichsweise großen Querschnitt, über den auch relativ große feste Rückstandsmaterialteile abgeführt werden können. Die Drehbewegung der Schaberwelle 301 ist in der Weise winkelversetzt, daß die Schaber 303 nicht über die Auslaßöffnungen 307 hinwegbewegt werden.

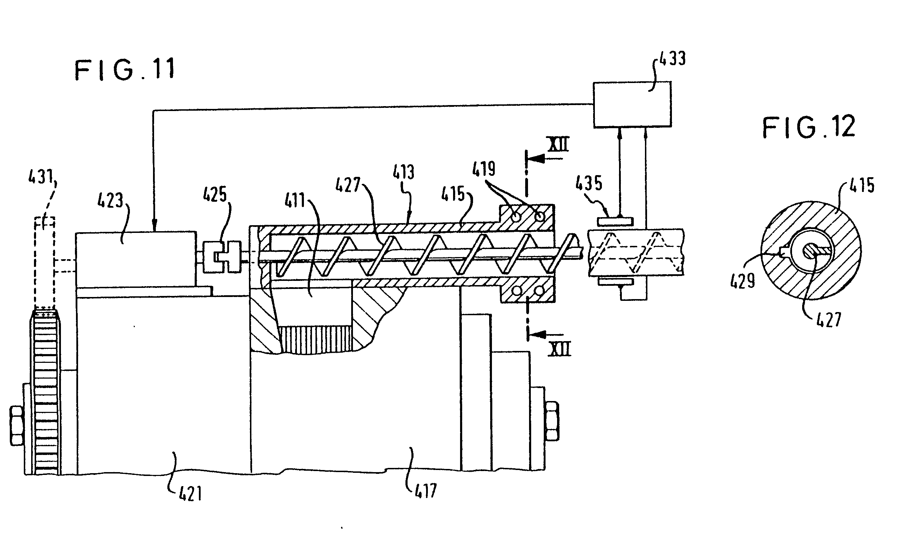

Die Fig. 11 und 12 zeigen eine andere Ausführungsform einer Auslaßsteuerung, wie sie bei einer Trennvorrichtung gemäß den Fig. 7 bis 10 alternativ eingesetzt werden kann. An die gegebenenfalls über einem Sammelkanal miteinander verbundenen Auslaßöffnungen 411 für das Rückstandsmaterial, von denen in Fig. 11 lediglich eine einzige dargestellt ist, schließt sich eine Dosierschnecke 413 an, deren Schneckenmantelrohr 415 am Filterkopf 417 gehalten ist und im Bereich seines Auslasses eine Kühleinrichtung, angedeutet durch Kühlkanäle 419 trägt. Ein den Filterkopf 417 haltender Rahmenteil 421 trägt eine Antriebsvorrichtung 423, die über eine Klauenkupplung 425 mit der Schnecke 427 der Dosierschnecke gekuppelt ist. Die Kühleinrichtung 419 kühlt den im Rückstandsmaterial enthaltenen thermoplastischen Kunststoff zu einer festen Masse ab, die in eine am Ausgang des Schneckenmantelrohrs 415 vorgesehene, axiale Nut 429 (Fig. 12) eingreift. Die Nut 429 verhindert das Drehen der erstarrten Kunststoff-Rückstandsmasse, womit bei Drehung der Schnecke 427 die erstarrte Masse aus dem Schneckenmantelrohr 415 strangförmig "ausgeschraubt" wird. Sofern die Antriebsbewegung der Dosierschnecke 413 von dem Antrieb der nicht näher dargestellten Schaberwelle abgeleitet wird, wie dies bei 431 durch ein gestrichelt eingezeichnetes Zahnrad angedeutet ist, enthält der Antrieb 423 einen Freilauf, der die hin- und hergehende Bewegung der Schaberwelle in eine gleichsinnige Drehbewegung umsetzt. Da die Dosierschnecke 413 über die Kupplung 425 angetrieben wird, läßt sich der Filterkopf 417 entsprechend den Ausführungsformen der Fig. 1 oder 7 problemlos abbauen

Der Antrieb 423 der Dosierschnecke 413 wird über eine Steuerung 433 hinsichtlich seiner mittleren Drehzahl abhängig vom Filterinnendruck oder aber bei metallhaltigen Rückstandsmaterialien abhängig vom Metallanteil gesteuert. Der Antrieb 423 ist hierzu gegebenenfalls über eine steuerbare Kupplung mit der Dosierschnecke 423 verbunden. Zum Erfassen des Metallanteils extrudiert die Dosierschnecke 413 das Rückstandsmaterial zwischen zwei Metallflächen eines kapazitiven Sensors 435. Zusätzlich oder statt der Regelung des Schneckenbetriebs kann di Steuerung 433 die Kühlleistung der Kühleinrichtung 419 steuern.

## Patentansprüche

1. Vorrichtung zum Trennen von Materialien unterschiedlicher Konsistenz, insbesondere zum Trennen von Thermoplastkunststoff-Feststoff-Gemischen oder Gemischen aus unterschiedlich schmelzbaren Kunststoffen, mit einem Gehäuse (1, 3; 151, 155; 201, 203), einem in einer Kammern (5) des Gehäuses (1, 3; 151, 153; 201, 203) gehaltenen, hohlzylindrischen Filterkörper (7; 159, 207) aus einem rohrförmigen Materialstück mit ihn radial durchdringenden Filterlöchern (37; 83; 237), einer in dem Gehäuse (1, 3; 151, 153; 201, 203) gelagerten gleichachsig zum Filterkörper (7; 159; 207) drehend angetriebenen Schaberwelle (17; 163; 217), welche den Filterkörper (7; 159, 207) unter Bildung eines Ringraums (23; 161; 223) axial durchsetzt und in dem Ringraum (23; 161; 223) an ihrem Mantel wenigstens einen zum Filterkörper (7, 159; 207) radial abstehenden Schaber (19; 103; 173; 219, 221) trägt, mit einer das Materialgemisch unter Druck in den Ringraum (23; 161; 223) einführenden Fördereinrichtung (27; 227), einem ersten, mit der Filteraußenseite verbundenen Materialauslaß (45; 71; 247) für das gefilterte Material und einem zweiten, mit der Filterinnenseite verbundenen Materialauslaß (47; 183; 255, 257; 411) mit Rückstaueigenschaft für das Rückstandsmaterial, dadurch gekennzeichnet, daß in die äußere Umfangsfläche des Filterkörpers (7; 159, 207) unter Bildung von einstückig mit dem Filterkörper (7; 159; 207) verbundener radialer Erhebungen (35; 81; 235) radiale Vertiefungen (33; 77; 233) eingeformt sind, die sich mit den Erhebungen (35; 81; 235) abwechseln und die Filterlöcher (37; 83; 237) enthalten, daß die Erhebungen (35; 81; 235) des Filterkörpers (7; 159; 207) an der inneren Umfangsfläche der Kammer (5) anliegen und daß der bzw. die Schaber (19; 103; 173; 219, 221) radial federnd gegen die innere Umfangsfläche des Filterkörpers (7; 159; 207) vorgespannt sind.

2. Vorrichtung nach Anspruch 1, dadurch gekennzeichnet, daß die Erhebungen (35; 81; 235) so angeordnet sind, daß der bzw. die Schaber (19; 103; 173; 219, 221) in jeder Drehstellung der Schaberwelle (17; 163; 217) über mehrere, längs des Schabers (19; 103; 173; 219, 221) verteilte Erhebungen (35; 81; 235) an der inneren Umfangsfläche der Kammer (5) abgestützt sind.

3. Vorrichtung nach Anspruch 2, dadurch gekennzeichnet, daß die Vertiefungen durch eine Vielzahl Umfangsnuten oder wenigstens eine schraubenlinienförmig den Filterkörper (7; 159; 207) umschließende Nut (33; 233) gebildet sind und die Schaber (19; 103; 173; 219, 221) zu den Nuten (33; 233) schräg oder quer verlaufend angeordnet sind und daß in den Nuten (33; 233) mehrere Filterlochreihen (37) nebeneinander vorgesehen sind.

4. Vorrichtung nach Anspruch 3, dadurch gekennzeichnet, daß die Filterlöcher benachbarter Lochreihen in Richtung der Reihen gegeneinander versetzt sind.

5. Vorrichtung nach Anspruch 2, dadurch gekennzeichnet, daß die Vertiefungen (77) entlang der äußeren Umfangsfläche des Filterkörpers (7; 159; 207) allseitig durch Erhebungen 181) voneinander getrennt sind.

6. Vorrichtung nach einem der vorhergehenden Ansprüche, dadurch gekennzeichnet, daß die radiale Wanddicke des Filterkörpers (7; 159; 207) in den Vertiefungen etwa gleich dem 10-fachen Durchmesser der Filterlöcher (37; 83; 237) ist und daß der Durchmesser der Filterlöcher (37; 83; 237) etwa 80 bis 200 μm beträgt.

7. Vorrichtung nach einem der vorhergehenden Ansprüche, dadurch gekennzeichnet, daß jeder Schaber (19; 103; 173; 219, 221) über einen in einer end passenden radialen Bohrung (55; 287) der Schaberwelle verschiebbar geführten Stift (57; 289) vom Inneren der Schaberwelle her federnd nach radial außen vorgespannt ist.

8. Vorrichtung nach Anspruch 7, dadurch gekennzeichnet, daß jeder Stift (289) von wenigstens einer zwischen dem Stift (289) und einem Abstützteil (277) der Schaberwelle (217) eingespannten, radial wirkenden Druckfeder (299) gegen den Filterkörper (207) vorgespannt ist.

9. Vorrichtung nach Anspruch 8, dadurch gekennzeichnet, daß die Druckfeder (299) in einer radialen Bohrung (281) der Schaberwelle (217) von außen her einsteckbar sitzt, daß der Stift (289) eng passend, jedoch radial verschiebbar in einer Hülse (283) geführt ist und daß die Hülse (283) ihrerseits in der Bohrung (281) radial verschiebbar ist.

10. Vorrichtung nach Anspruch 9, dadurch gekennzeichnet, daß die Druckfeder (299) innerhalb der Hülse (238) angeordnet ist und sich an einem am radial inneren Ende der Hülse (283) befestigten Druckstück (293) abstützt.

11. Vorrichtung nach Anspruch 10, dadurch gekennzeichnet, daß das Druckstück (293) gegen die Hülse (283) abgedichtet ist und daß die Hülse (283) mit flüssigem oder plastischem Material gefüllt ist.

12. Vorrichtung nach Anspruch 8, dadurch gekennzeichnet, daß in der Schaberwelle (217; 163) eine Nockenstange (279) mit radial abstehenden Nocken (275, 277) axial verschiebbar ist und daß die Druckfedern (299) zwischen den Nocken (75, 77) und den Stiften einspannbar sind.

13. Vorrichtung nach Anspruch 12, dadurch gekennzeichnet, daß die Nockenstange gleichachsig zur Schaberwelle verläuft und daß die Schaber paarweise auf diametral gegenüberliegenden Seiten der Nockenstange angeordnet sind.

14. Vorrichtung nach Anspruch 7, dadurch gekennzeichnet, daß jeder Stift (57) mit einem Kolben (59) in Verbindung steht, der in einem auf der radial innen gelegenen Seite des Stifts (57) in der Schaberwelle (17) angeordneten Hydraulik- oder Pneumatikzylinder (61) zur Erzeugung radial nach außen gerichteter Kräfte radial verschiebbar ist.

15. Vorrichtung nach Anspruch 14, dadurch gekennzeichnet, daß der Durchmesser der Kolben (59) größer ist als der in der Bohrung geführte Teil des Stifts (57).

16. Vorrichtung nach Anspruch 14, dadurch gekennzeichnet, daß sämtliche Zylinder (61) an eine gemeinsame Hydraulik- bzw. Pneumatikdruckquelle (69, 71) angeschlossen sind.

17. Vorrichtung nach Anspruch 16, dadurch gekennzeichnet, daß die Druckquelle (69, 71) einen federnd vorgespannten Fluidspeicher aufweist.

18. Vorrichtung nach einem der vorhergehenden Ansprüche, dadurch gekennzeichnet, daß in der Umlaufbahn oder deren Umfangsverlängerung des bzw. der Schaber (219, 221; 303) jeweils wenigstens eine Auslaßöffnung (251, 253; 307) des zweiten Materialauslasses (255, 257; 307) vorgesehen ist, die den Filterkörper (207) radial durchbricht.

19. Vorrichtung nach Anspruch 18, dadurch gekennzeichnet, daß ein Revensierantrieb die Schaberwelle (217; 301) mit wechselnder Drehrichtung über einen vorgegebenen Drehwinkel kleiner als 360° hin und her bewegt und daß jeder der Auslaßöffnungen (251, 253) in Umfangsrichtung außerhalb der durch diesen Drehwinkel bestimmten Bewegungsbahnen der Schaber (219, 221) anschließend angeordnet ist.

20. Vorrichtung nach Anspruch 18 oder 19, dadurch gekennzeichnet, daß die Schaberwelle (217; 301) mehrere, in axialer Richtung nebeneinander, jedoch höchstens um die axiale Breite ihrer Bewegungsbahnen gegeneinander versetzt angeordnete Schaber (219, 221; 303) aufweist.

21. Vorrichtung nach Anspruch 20, dadurch gekennzeichnet, daß jedem Schaber (219, 221) eine Auslaßöffnung (251, 253) zugeordnet ist und daß in axialer Richtung nebeneinander angeordnete Schaber (219, 221) und Auslaßöffnungen (251, 253) in Umfangsrichtung um 180° versetzt sind.

22. Vorrichtung nach Anspruch 20 oder 21, dadurch gekennzeichnet, daß die Schaber (219, 221) axial verlaufende Schaberkanten haben und daß die Auslaßöffnungen (251, 253) als axial verlaufende Schlitze in dem Filterkörper (207) ausgebildet sind.

23. Vorrichtung nach Anspruch 20, dadurch gekennzeichnet, daß die Schaber (303) in axialer Richtung in einer Reihe eng benachbart nebeneinander angeordnet sind.

24. Vorrichtung nach Anspruch 23, dadurch gekennzeichnet, daß am Umfang um 180° versetzt zwei Reihen in radialer Sicht zickzackförmig nebeneinander angeordnete Schaber (303) vorgesehen sind, daß sich die Eckpunkte der zickzackförmigen Reihen in Umfangsrichtung paarweise spiegelbildlich gegenüberliegen, daß zwei um 180° in Umfangsrichtung versetzte Reihen von Auslaßöffnungen (307) vorgesehen sind und daß die Auslaßöffnungen (307) jeder Reihe mit axialem Abstand voneinander und zu den Auslaßöffnungen (307) der anderen Reihe axial versetzt angeordnet sind.

25. Vorrichtung nach Anspruch 24, dadurch gekennzeichnet, daß zumindest ein Teil der Auslaßöffnungen (307) angenähert rautenförmigen Querschnitt hat.

26. Vorrichtung nach Anspruch 1 oder 20, dadurch gekennzeichnet, daß die Schaber (19; 173) in wenigstens einer Reihe axial nebeneinander angeordnet und in den Reihen zueinander parallel ausgerichtet sind.

27. Vorrichtung nach Anspruch 26, dadurch gekennzeichnet, daß zwei Reihen Schaber (173) vorgesehen sind, in denen sich die Schaber (19; 173) paarweise diametral gegenüberliegen und daß die Schaber (173) so gerichtet sind, daß sie gleichgerichtete Axialschubkräfte auf das Rückstandsmaterial ausüben.

28. Vorrichtung nach Anspruch 1, dadurch gekennzeichnet, daß der zweite Materialauslaß (255, 257) das Rückstandsmaterial über wenigstens einen mittels einer Kühleinrichtung (263) abkühlbaren Kühlkanal abführt, an dessen Auslaßende eine Querschnittsverengung (259, 261) vorgesehen ist.

29. Vorrichtung nach Anspruch 28, dadurch gekennzeichnet, daß die Querschnittsverengung (259, 261) mittels einer Heizeinrichtung (265) beheizbar ist.

30. Vorrichtung nach Anspruch 28, dadurch gekennzeichnet, daß sich die Kühlkanäle des zweiten Materialauslassen (255, 257) in Abflußrichtung konisch erweitern.

31. Vorrichtung nach Anspruch 28 oder 29, dadurch gekennzeichnet, daß eine Temperaturregelung die Temperatur der Kühleinrichtung (263) und/oder der Heizeinrichtung (265) abhängig vom Druck des Materialgemisches in dem Filterkörper regelt.

32. Vorrichtung nach Anspruch 1, dadurch gekennzeichnet, daß der zweite Materialauslaß (411) eine Dosierschnecke (47; 191; 413) enthält und daß eine Kühleinrichtung (49; 195; 419) das Rückstandsmaterial im Bereich der Dosierschnecke (47; 191; 413) abkühlt.

33. Vorrichtung nach Anspruch 32, dadurch gekennzeichnet, daß die Dosierschnecke (413) ein im Bereich seines Auslaßendes mit wenigstens einer axialen Nut (429) versehenes Schneckenmantelrohr (415) aufweist.

34. Vorrichtung nach Anspruch 32, dadurch gekennzeichnet, daß der zweite Materialauslaß mehrere über den Umfang der Dosierschnecke (191) verteilte Auslaßkanäle (183) umfaßt, in die die Dosierschnecke (191) über einen Teil der radialen Weite der Kanäle (183) eingreift.

35. Vorrichtung nach Anspruch 32, dadurch gekennzeichnet, daß die Dosierschnecke (47) gleichachsig zur Schaberwelle (17) angeordnet ist und einen Schneckendurchmesser kleiner als der Innendurchmesser des Filterkörpers (7) hat und daß der Ringraum (23) zwischen Schaberwelle (17) und Filterkörper (7) über einen Ringraum (51) oder wenigstens einen Kanal mit dem Umfangsflächenbereich der Dosierschnecke (47) verbunden ist und das Rückstandsmaterial im wesentlichen radial in die Dosierschnecke (47) einleitet.

36. Vorrichtung nach einem der Ansprüche 32 bis 35, dadurch gekennzeichnet, daß die Dosierschnecke (191; 413) über einen Freilauf (189; 423) mit der Schaberwelle (163) in Antriebsverbindung steht.

37. Vorrichtung nach Anspruch 28 oder 32, dadurch gekennzeichnet, daß eine Steuerung die Temperatur der Kühleinrichtung und/oder die Drehzahl der Dosierschnecke abhängig vom Druck des Materialgemisches in dem Filterkörper regelt.

38. Vorrichtung nach Anspruch 28 oder 32, wobei der Materialrückstand Metall enthält, dadurch gekennzeichnet, daß eine Steuerung (433) die Temperatur der Kühleinrichtung (419) und/oder die Drehzahl der Dosierschnecke anhängig vom Metallanteil des Rückstandsmaterials regelt.

39. Vorrichtung nach Anspruch 38, dadurch gekennzeichnet, daß die Steuerung (433) einen kapazitiven Sensor (435) zur Ermittlung des Metallanteils im Rückstandsmaterial aufweist.

40. Vorrichtung nach einem der vorhergehenden Ansprüche, dadurch gekennzeichnet, daß die Schaberwelle (17; 163) axial beiderseits des Filterkörpers (7; 159) an gleich großen Wellendurchmessern in dem Gehäuse (1, 3; 151, 155) gelagert ist.

41. Vorrichtung nach einem der vorhergehenden Ansprüche, dadurch gekennzeichnet, daß die Schaberwelle (17, 163; 217) einen Rahmenteil (1; 151; 201) des Gehäuses durchsetzt, an dem auf der axial einen Seite der Filterkörper (7; 159, 207) gehalten ist und auf der axial anderen Seite die Schaberwelle (17; 163; 217) mit einem Antrieb (31) gekuppelt ist.

42. Vorrichtung nach Anspruch 41, dadurch gekennzeichnet, daß sich an den zwischen der Schaberwelle (17; 163; 217) und dem Filterkörper (7; 159; 207) gebildeten Ringraum (23; 161; 223) ein zwischen der Schaberwelle (17; 163; 217) und einer Wellendurchtrittsöffnung in dem Rahmenteil (1; 151; 201) gebildeter Ringraum anschließt, in den ein Zuführkanal (25; 225) der Fördereinrichtung (27) quer einmündet.

43. Vorrichtung nach Anspruch 27, dadurch gekennzeichnet, daß axial zwischen dem Rahmenteil (1; 151; 201) und dem Filterkörper (7; 159; 207) ein Sammelringkanal (41; 169; 243) angeordnet ist, in den mit der Filteraußenseite verbundene axiale Kanäle (39; 167; 239) des ersten Materialauslasses münden und der ferner mit Auslaßdüsen (45; 247) verbunden ist.

**Revendications**

1. Dispositif pour séparer des matières de consistance différente, en particulier pour séparer des mélanges de matières thermoplastiques et de matières solides, ou des mélanges de matières thermoplastiques de points de fusion différents, comportant un boîtier (1, 3; 151, 155; 201, 203), un corps de filtre cylindrique creux (7; 159; 207) retenu dans une chambre (5) du boîtier (1, 3; 151, 153; 201, 203), constitué par une pièce tubulaire comportant des trous de filtre (37; 83; 237) la traversant, un arbre à racloirs (17; 163; 217) entraîné en rotation, monté dans le boîtier (1, 3; 151, 153; 201, 203) coaxialement par rapport au corps de filtre (7; 159; 207), qui traverse axialement le corps de filtre (7; 159; 207) en formant une chambre annulaire (23; 161; 223) et qui porte dans une chambre annulaire (23; 161; 223) sur sa surface latérale au moins un racloir (19; 103; 173; 219; 221) faisant saillie radialement par rapport au corps de filtre (7; 159; 207), comportant un dispositif de transport (27; 227) introduisant le mélange de matières sous pression dans la chambre annulaire (23; 161; 223), une première sortie de matière (45; 71; 247) reliée à la face extérieure du filtre pour la matière filtrée et une seconde sortie de matière (47; 183; 255, 257; 411) reliée à la face intérieure du filtre, présentant des caractéristiques de retenue pour la matière résiduelle, caractérisé en ce que des creux radiaux (33; 77; 233) sont formés dans la surface périphérique extérieure du corps de filtre (7; 159; 207) avec formation de rehaussements radiaux (35; 81; 235) reliés d'un seul tenant au corps de filtre (7; 159; 207), creux qui alternent avec les rehaussements (35; 81; 235) et comprennent les trous de filtre (37; 83; 237), en ce que les rehaussements (35; 81; 235) du corps de filtre (7; 159; 207) sont en contact avec la surface périphérique intérieure de la chambre (5), et en ce que le racloir ou les racloirs (19; 103; 173; 219; 221) est ou sont précontraint(s) radialement élastiquement contre la surface périphérique intérieure du corps de filtre (7; 159; 207).

2. Dispositif selon la revendication 1, caractérisé en ce que les rehaussements (35; 81; 235) sont disposés de façon que le racloir ou les racloirs (19; 103; 173; 219, 221) s'appuie(nt), dans chaque position angulaire de l'arbre à racloirs (17; 163; 217) sur la surface périphérique intérieure de la chambr (5) par l'intermédiaire de plusieurs rehaussements (35; 81; 235) répartis le long du (ou de chaque) racloir (19; 103; 173; 219, 221).

3. Dispositif selon la revendication 2, caractérisé en ce que les creux sont formés par une pluralité de rainures périphériques ou par au moins une rainure (33; 233) embrassant hélicoïdalement le corps de filtre (7; 159, 207), tandis que les racloirs (19; 103; 173; 219, 221) sont disposés de façon à être dirigés obliquement ou transversalement par rapport aux rainures (33; 233), et en ce que plusieurs rangées de trous de filtres (37) contigües sont prévues dans les rainures (33; 233).

4. Dispositif selon la revendication 3, caractérisé en ce que les trous de filtre de rangées de trous voisines sont décalés mutuellement dans la direction des rangées.

5. Dispositif selon la revendication 2, caractérisé en ce que les creux (77) sont séparés mutuellement de toutes parts par des rehaussements (81) le long de la surface périphérique extérieure du corps de filtre (7; 159; 207).

6. Dispositif selon l'une des revendications précédentes, caractérisé en ce que l'épaisseur de paroi radiale du corps de filtre (7; 159; 207) dans les creux est à peu près égale à dix fois le diamètre des trous de filtre (37; 83; 237), et en ce que le diamètre des trous de filtre (37; 83; 237) est égal à environ 80 à 200 µm.

7. Dispositif selon l'une des revendications précédentes, caractérisé en ce que chaque racloir (19; 103; 173; 219, 221) est précontraint élastiquement radialement vers l'extérieur à partir de l'intérieur de l'arbre à racloirs au moyen d'une broche (57; 289) guidée de façon à pouvoir coulisser dans un alésage radial (55; 287) à ajustage serré de l'arbre à racloirs.

8. Dispositif selon la revendication 7, caractérisé en ce que chaque broche (289) est précontrainte contre le corps de filtre (207) par au moins un ressort de compression à action radiale (299) encastré entre la broche (289) et un élément d'appui (277) de l'arbre à racloirs (217).

9. Dispositif selon la revendication 8, caractérisé en ce que le ressort de compression (299) est placé dans un alésage radial (281) de l'arbre à racloirs (217) avec possibilité d'introduction de l'extérieur, en ce que la broche (289) est guidée dans un manchon (283) avec ajustage serré, mais avec possibilité de coulissement radial, et en ce que le manchon (283) est lui-même guidé de façon à pouvoir coulisser radialement dans l'alésage (281).

10. Dispositif selon la revendication 9, caractérisé en ce que le ressort de compression (299) est placé à l'intérieur du manchon (283) et s'appuie sur une pièce de compression (293) fixée à l'extrémité radialement interieure du manchon (283).

11. Dispositif selon la revendication 10, caractérisé en ce que la pièce de compression (293) est en contact étanche avec le manchon (283), et en ce que le manchon (283) est rempli de matière liquide ou plastique.

12. Dispositif selon la revendication 8, caractérisé en ce qu'une tige à cames (279) comportant des cames (275, 277) faisant saillie radialement peut coulisser axialement dans l'arbre à racloirs (217; 163), et en ce que les ressorts de compression (299) peuvent être encastrés entre les cames (75, 77) et les broches.

13. Dispositif selon la revendication 12, caractérisé en ce que la tige à cames est coaxiale par rapport à l'arbre à racloirs, et en ce que les racloirs sont disposés deux à deux sur des côtés diamétralement opposés de la tige à cames.

14. Dispositif selon la revendication 7, caractérisé en ce que chaque broche (57) est en liaison avec un piston (59) qui peut coulisser radialement dans un cylindre hydraulique ou pneumatique (61) placé dans l'arbre à racloirs (17) du côté radialement intérieur de la broche (57), pour engendrer des forces dirigées radialement vers l'extérieur.

15. Dispositif selon la revendication 14, caractérisé en ce que le diamètre des pistons (59) est supérieure à celui de la partie de la tige (57) guidée dans l'alésage.

16. Dispositif selon la revendication 14, caractérisé en ce que tous les cylindres (61) sont raccordés à une source de pression hydraulique ou pneumatique commune (69, 71).·

17. Dispositif selon la revendication 16, caractérisé en ce que la source de pression (69, 71) comporte un accumulateur de fluide précontraint élastiquement.

18. Dispositif selon l'une des revendications précédentes, caractérisé en ce qu'il est prévu sur chaque trajectoire du ou des racloirs (219, 221; 303) ou son prolongement périphérique au moins une ouverture de sortie respective (251, 253; 307) de la second sortie de matière (255, 257; 307), qui traverse radialement le corps de filtre (207).

19. Dispositif selon la revendication 18, caractérisé en ce qu'une transmission réversible fait effectuer à l'arbre à racloirs (217; 301) des mouvements de va-et-vient sur un angle de rotation prédéterminé inférieure à 360°, avec alternance du sens de rotation, et en ce que chacune des ouvertures de sortie (251, 253) est placée en direction périphérique à l'extérieur des trajectoires de déplacement des racloirs (219, 221) déterminées par cet angle de rotation, en position contiguë.

20. Dispositif selon la revendication 18 ou 19, caractérisé en ce que l'arbre à racloirs (217; 301) comporte plusieurs racloirs (219, 221; 303) contigus en direction axiale, mais décalés mutuellement au plus de la largeur axiale de leurs trajectoires de déplacement.

21. Dispositif selon la revendication 20, caractérisé en ce qu'il correspond à chaque racloir (219, 221) une ouverture de sortie (251, 253), et en ce que les racloirs (219, 221) et les ouvertures de sortie (251, 253), contigus en direction axiale, sont décalés de 180° en direction périphérique.

22. Dispositif selon la revendication 20 ou 21, caractérisé en ce que les racloirs (219, 221) comportent des bords de raclage dirigés axialement, et en ce que les ouvertures de sortie (251, 253) sont réalisées sous la forme de fentes axiales dans le corps de filtre (207).

23. Dispositif selon la revendication 20, caractérisé en ce que les racloirs (303) sont disposés tout près les uns des autres suivant une rangée en direction axiale.

24. Dispositif selon la revendication 23, caractérisé en ce que deux rangées de racloirs (303) sont prévues en zigzag dans des positions contiguës en position radiale avec décalage de 180° sur la périphérie, en ce que les sommets des rangées en zigzag sont opposés symétriquement deux à deux en direction périphérique, en ce que deux rangées d'ouvertures de sortie (307) décalées de 180° en direction périphérique sont prévues, et en ce que les ouvertures de sortie (307) de chaque rangée sont disposées à distance axiale mutuelle et avec décalage axial par rapport aux ouvertures de sortie (307) de l'autre rangée.

25. Dispositif selon la revendication 24, caractérisé en ce qu'une partie au moins des ouvertures de sortie (307) présentent une section droite en losange.

26. Dispositif selon la revendication 1 ou 20, caractérisé en ce que les racloirs (19; 173) sont disposés sur au moins une rangée dans des positions axialement contiguës, et sont orientés parallèlement entre eux dans les rangées.

27. Dispositif selon la revendication 26, caractérisé en ce qu'il est prévu deux rangées de racloirs (173) dans lesquelles les racloirs (19; 173) sont deux à deux diamétralement opposés, et en ce que les racloirs (173) sont dirigés de façon à exercer sur la matière résiduelle des poussées axiales dirigées dans le même sens.

28. Dispositif selon la revendication 1, caractérisé en ce que la seconde sortie de matière (255, 257) évacue la matière résiduelle par l'intermédiaire d'au moins un canal de refroidissement pouvant être refroidi grâce à un dispositif de refroidissement (263), à l'extrémité de sortie duquel un rétrécissement de section droite ou étranglement (259, 261) est prévu.

29. Dispositif selon la revendication 28, caractérisé en ce que le rétrécissement de section droite (259, 261) peut être chauffé au moyen d'un dispositif de chauffage (265).

30. Dispositif selon la revendication 28, caractérisé en ce que les canaux de refroidissement de la seconde sortie de matière (255, 257) s'élargissent coniquement dans la direction d'évacuation.

31. Dispositif selon la revendication 28 ou 29, caractérisé en ce qu'un dispositif de réglage de la température règle la température du dispositif de refroidissement (263) et/ou du dispositif de chauffage (265) en fonction de la pression du mélange de matières dans le corps de filtre.

32. Dispositif selon la revendication 1, caractérisé en ce que la seconde sortie de matière (411) comprend une vis sans fin de dosage (47; 191; 413), et en ce qu'un dispositif de refroidissement (49; 195; 419) refroidit la matière résiduelle au voisinage de la vis sans fin de dosage (47; 191; 413).

33. Dispositif selon la revendication 32, caractérisé en ce que la vis sans fin de dosage (413) comporte un tube de protection de vis sans fin (415) comportant au moins une rainure axiale (429).

34. Dispositif selon la revendication 32, caractérisé en ce que la seconde sortie de matière comprend plusieurs canaux de sortie (183) répartis sur la périphérie de la vis sans fin de dosage (191), dans lesquels la vis sans fin de dosage (191) s'engage sur une partie de la largeur radiale des canaux (183).

35. Dispositif selon la revendication 32, caractérisé en ce que la vis sans fin de dosage (47) est disposée coaxialement par rapport à l'arbre à racloirs (17) et présente un diamètre inférieure au diamètre intérieur du corps de filtre (7), et en ce que l'intervalle annulaire (23) entre l'arbre à racloirs (17) et le corps de filtre (7) est relié par une chambre annulaire (51) ou au moins un canal à la zone superficielle périphérique de la vis sans fin de dosage (47) et introduit la matière résiduelle sensiblement radialement dans la vis sans fin de dosage (47).

36. Dispositif selon l'une des revendications 32 à 35, caractérisé en ce que la vis sans find de dosage (191; 413) est reliée cinématiquement à l'arbre à racloirs (163) ar l'intermédiaire d'un accouplement à roue libre (189; 423).

37. Dispositif selon la revendication 28 ou 32, caractérisé en ce qu'un mécanisme de commande règle la température du dispositif de refroidissement et/ou la vitesse de rotation de la vis sans fin de dosage en fonction de la pression du mélange de matières dans le corps de filtre.

38. Dispositif selon la revendication 28 ou 32, dans le cas où la matière résiduelle renferme du métal, caractérisé en ce qu'un mécanisme de commande (433) règle la température du dispositif de refroidissement (419) et/ou la vitesse de rotation de la vis sans fin de dosage en fonction de la proportion de métal de la matière résiduelle.

39. Dispositif selon la revendication 38, caractérisé en ce que le mécanisme de commande (433) comporte un capteur capacitif (435) pour déterminer la proportion de métal de la matière résiduelle.

40. Dispositif selon l'une des revendications précédentes, caractérisé en ce que l'arbre à racloirs (17; 163) est placé, axialement des deux côtés du corps de filtre (7; 159), sur des diamètres d'arbre égaux dans le boîtier (1, 3; 151, 155).

41. Dispositif selon l'une des revendications précédentes, caractérisé en ce que l'arbre à racloirs (17; 163; 217) traverse une partie de châssis (1; 151; 201) du boîtier, sur laquelle il est maintenu de l'un des côtés axiaux du corps de filtre (7; 159; 207), tandis que, de l'autre côté axial, l'arbre à racloirs (17; 163; 217) est accouplé à une transmission (31).

42. Dispositif selon la revendication 41, caractérisé en ce qu'une chambre annulaire dans laquelle un canal d'amenée (25; 225) du dispositif de transport (27) débouche transversalement, formée entre l'arbre à racloirs (17; 163; 217) et une ouverture de passage d'arbre dans la partie de châssis (1: 151; 201), se raccorde à la chambre annulaire (23; 161; 223) formée entre l'arbre à racloirs (17; 163; 217) et le corps de filtre (7; 159; 207).

43. Dispositif selon la revendication 27, caractérisé en ce qu'un canal collecteur annulaire (41; 169; 243) est disposé axialement entre la partie de châssis (1; 151; 201) et le corps de filtre (7; 159; 207), canal collecteur dans lequel débouchant des canaux axiaux (39; 167; 239) de la première sortie de matière reliés à la face extérieure du filtre, et qui est en outre relié à des ajutages de sortie (45; 247).

**Claims**

1. Device for separating materials of different consistencies, especially for the separation of mixtures of thermoplastic synthetic plastics material and solid or mixtures of differently fusible synthetic plastics materials, having a housing (1, 3; 151, 155; 201, 203), a hollow cylindrical filter body (7; 159; 207) held in a chamber (5) of the housing (1, 3; 151, 153; 201, 203) and consisting of a tubular material piece with filter holes (37; 83; 237) radially penetrating it, a scraper shaft (17; 163; 217) mounted in the housing (1, 3; 151, 153; 201, 203) and driven in rotation coaxially with the filter body (7; 159; 207) which shaft passes axially through the filter body (7; 159; 207) forming an annular space (23; 161; 223) and carries in the annular space (23; 161; 223) at its periphery at least one scraper (19; 103; 173; 219, 221) protruding radially to the filter body (7; 159; 207), with a conveyor device (27; 227) introducing the material mixture under pressure into the annular space (23; 161; 223), a first material outlet (45; 71; 247) connected with the filter exterior for the filtered material and a second material outlet (47; 183; 255; 257; 411) connected with the filter interior with retention property for the residue material, characterised in that radial depressions (33; 77; 233) are formed into the external circumferential surface of the filter body (7; 159; 207) forming radial elevations (35; 81; 235) connected in one piece with the filter body (7; 159; 207) which depressions alternate with the elevations (35; 81; 235) and contain filter holes (37; 83; 237), in that the elevations (35; 81; 235) of the filter body (7; 159; 207) rest on the inner circumferential surface of the chamber (5) and in that the scraper or scrapers (19; 103; 173; 219; 221) are radially resiliently initially stressed against the internal circumferential surface of the filter body (7; 159; 207).

2. Device according to Claim 1, characterised in that the elevations (35; 81; 235) are so arranged that the scraper or scrapers (19; 103; 173; 219, 221), in every position of the scraper shaft (17; 163; 217) in rotation, are supported on the inner circumferential surface of the chamber (5) through a plurality of elevations (35; 81; 235) distributed along the scraper (19; 103; 173; 219, 221).

3. Device according to Claim 2, characterised in that the depressions are formed by a plurality of circumferential grooves or at least one groove (33; 233) helically surrounding the filter body (7; 159; 207) and the scrapers (19; 103; 173; 219, 221) are arranged extending obliquely or transversely in relation to the grooves (33; 233) and in that several filter hole rows (37) are provided side by side in the grooves (33; 233).

4. Device according to Claim 3, characterised in that the filter holes of ajacent hole rows are offset in relation to one another in the direction of the rows.

5. Device according to Claim 2, characterised in that the depressions (77) are separated from one another on all sides by elevations (81) along the outer circumferential surface of the filter body (7; 159; 207).

6. Device according to one of the preceding Claims, characterised in that the radial wall thickness of the filter body (7; 159; 207) in the depressions is approximately equal to 10 times the diameter of the filter holes (37, 83; 237) and in that the diameter of the filter holes (37; 83; 237) amounts to about 80 to 200 µm.

7. Device according to one of the preceding Claims, characterised in that each scraper (19; 103; 173; 219, 221) is resiliently radially outwardly initially stressed from the interior of the scraper shaft through a pin (57; 289) guided displaceably in a closely fitting radial bore (55, 287) of the scraper shaft.

8. Device according to Claim 7, characterised in that each pin (289) is initially stressed against the filter body (207) by at least one radially acting compression spring (299) clamped in between the pin (289) and a support part (277) of the scraper shaft (217).

9. Device according to Claim 8, characterised in that the compression spring (299) is seated insertably from the exterior in a radial bore (281) of the scraper shaft (217), in that the pin (289) is guided closely fittingly but radially displaceably in a sleeve (283) and in that the sleeve (283) in turn is radially displaceable in the bore (281).

10. Device according to Claim 9, characterised in that the compression spring (299) is arranged within the sleeve (283) and is supported on a thrust piece (293) secured to the radially inner end of the sleeve (283).

11. Device according to Claim 10, characterised in that the thrust piece (293) is sealed off against the sleeve (283) and in that the sleeve (283) is filled with liquid or plastic material.

12. Device according to Claim 8, characterised in that a cam rod (279) with radially protruding cams (275, 277) is axially displaceable in the scraper shaft (217; 163) and in that the compression springs (299) are clampable in between the cams (75, 77) and the pins.

13. Device according to Claim 12, characterised in that the cam rod extends coaxially with the scraper shaft and in that the scrapers are arranged by pairs on diametrically opposite sides of the cam rod.

14. Device according to Claim 7, characterised in that each pin (57) is in connection with a piston (59) which is radially displaceable in a hydraulic or pneumatic cylinder (61), arranged on the radially inwardly situated side of the pin (57) in the scraper shaft (17), for the generation of radially outwardly directed forces.

15. Device according to Claim 14, characterised in that the diameter of the piston (59) is larger than the part of the pin (57) guided in the bore.

16. device according to Claim 14, characterised in that all cylinders (61) are connected to one common hydraulic or pneumatic pressure source (69, 71).

17. Device according to Claim 16, characterised in that the pressure source (69, 71) comprises a resiliently initially stressed fluid reservoir.

18. Device according to one of the preceding Claims, characterised in that in the path of rotation or its circumferential prolongation of the scraper or scrapers (219, 221; 303) in each case at least one outlet opening (251, 253; 307) of the second material outlet (255, 257; 307) is provided which radially penetrates the filter body (207).

19. Device according to Claim 18, characterised in that a reversing drive moves the scraper shaft (217; 301) to and fro with alternating direction of rotation over a predetermined angle of rotation less than 360° and in that each of the outlet openings (251, 253) is arranged adjoiningly in the circumferential direction outside the paths of movement of the scrapers (219, 221) determined by this angle of rotation.

20. Device according to Claim 18 or 19, characterised in that the scraper shaft (217; 301) comprises several scrapers (219, 221; 303) arranged in the axial direction side by side but offset in relation to one another at most by the axial width of their paths of movement.

21. Device according to Claim 20, characterised in that an outlet opening (251, 253) is allocated to each scraper (219, 221) and in that scrapers (219, 221) and outlet openings (251, 253) arranged side by side in the axial direction are offset by 180° in the circumferential direction.

22. Device according to Claim 20 or 21, characterised in that the scrapers (219, 221) have axially extending scraper edges and in that the outlet openings (251, 253) are formed as axially proceedings slots in the filter body (207).

23. Device according to Claim 20, characterised in that the scrapers (303) are arranged closely adjacently beside one another in a row in the axial direction.

24. Device according to Claim 23, characterised in that two rows of scrapers (303) arranged in zigzag form beside one another in radial view are provided staggered by 180° on the circumference, in that the corner points of the rows of zig-zag form lie oppositely in mirror image by pairs in the circumferential direction, in that two rows of outlet openings (307) staggered by 180° in the circumferential direction are provided and in that the outlet openings (307) of each row are arranged with axial spacing from one another and axially offset in relation to the outlet openings (307) of the other row.

25. Device according to Claim 24, characterised in that at least one part of the outlet openings (307) has approximately lozenge-shaped cross-section.

26. Device according to Claim 1 or 20, characterised in that the scrapers (19; 173) are arranged in at least one row axially one beside the other and are aligned paralle; with one another in the rows.

27. Device according to Claim 26, characterised in that two rows of scrapers (173) are provided in which the scrapers (19; 173) lie diametrically oppositely by pairs and in that the scrapers (173) are so directed that they exert similarly directed axial thrust forces upon the residue material.

28. Device according to Claim 1, characterised in that the second material outlet (255, 257) conducts away the residue material by way of at least one cooling passage coolable by means of a cooling apparatus (263), at the outlet end of which passage a constriction (259, 261) of cross-section is provided.

29. Device according to Claim 28, characterised in that the constriction (259, 261) of cross-section is heatable by means of a heating apparatus (265).

30. Device according to Claim 28, characterised in that the cooling passages of the second material outlet (255; 257) widen conically in the outflow direction.

31. Device according to Claim 28 or 29, characterised in that a temperature regulation system regulates the temperature of the cooling apparatus (263) and/or of the heating apparatus (265) in dependence upon the pressure of the material mixture in the filter body.

32. Device according to Claim 1, characterised in that the second material outlet (411) contains a quantity-regulating worm (47; 191; 413) and in that a cooling apparatus (49; 195; 419) cools the residue material in the region of the quantity-regulating worm (47; 191; 413).

33. Device according to Claim 32, characterised in that the quantity-regulating worm (413) comprises a worm jacket tube (415) provided with at least one axial groove (429) in the region of its outlet end.

34. Device according to Claim 32, characterised in that the second material outlet comprises several outlet passages (183) distributed over the circumference of the quantity-regulating worm (191), into which the quantity-regulating worm (191) engages over a part of the radial width of the passages (183).

35. Device according to Claim 32, characterised in that the auantity-regulating worm (47) is arranged coaxially with the scraper shaft (17) and has a worm diameter smaller than the internal diameter of the filter body (7) and in that the annular space (23) between scraper shaft (17) and filter body (7) is connected by way of an annular space (51) or at least one passage with the circumferential surface region of the quantity-regulating worm (47) and introduces the residue material substantially radially into the quantity-regulating worm (47).

36. Device according to one of Claims 32 to 35, characterised in that the quantity-regulating worm (191; 413) is in drive connection with the scraper shaft (163) through a free-wheel (189; 423).

37. Device according to Claim 28 or 32, characterised in that a control system regulates the temperature of the cooling apparatus and/or the rotation rate of the quantity-regulating worm in dependence upon the pressure of the material mixture in the filter body.

38. Device according to Claim 28 or 32, where the material residue contains metal, characterised in that a control system (433) regulates the temperature of the cooling apparatus (419) and/or the rotation rate of the quantity-regulating worm in dependence upon the proportion of metal of the residue material.

39. Device according to Claim 38, characterised in that the control system (433) comprises a capacitative sensor (435) for ascertaining the proportion of metal in the residue material.

40. Device according to one of the preceding Claims, characterised in that the scraper shaft (17; 163) is mounted axially on both sides of the filter body (7; 159) on equally large shaft diameters in the housing (1, 3; 151, 155).

41. Device according to one of the preceding Claims, characterised in that the scraper shaft (17; 163; 217) passes through a frame part (1; 151; 201) of the housing on which the filter body (7; 159; 207) is held axially on the one side and the scraper shaft (17; 163; 217) is coupled with a drive (31) axially on the other side.

42. Device according to Claim 41, characterised in that the annular space (23; 161; 223) formed between the scraper shaft (17; 163; 217) and the filter body (7; 159; 207) is adjoined by an annular space formed between the scraper shaft (17; 163; 217) and a shaft passage opening in the frame part (1; 151; 201), into which annular space a feed passage (25; 225) of the conveyor device (27) opens transversely.

43. Device according to Claim 27, characterised in that axially between the frame part (1; 151; 201) and the filter body (7; 159; 207) an annular collecting passage (41; 169; 243) is arranged into which there open axial passages (39; 167; 239) of the first material outlet connected with the filter exterior, and which further is connected with outlet nozzles (45; 247).

FIG. 1

FIG. 4

## FIG. 2

## FIG. 3

## FIG. 5

## FIG. 6

**0 078 064**

FIG. 7

FIG. 8

0 078 064

5

FIG.9

FIG.10

FIG.11

FIG.12

0 078 064